(19) Europäisches Patentamt / European Patent Office / Office européen des brevets

(11) **EP 4 645 857 A1**

(12) **EUROPEAN PATENT APPLICATION**
published in accordance with Art. 153(4) EPC

(43) Date of publication:
**05.11.2025 Bulletin 2025/45**

(21) Application number: **23910711.3**

(22) Date of filing: **27.12.2023**

(51) International Patent Classification (IPC):
**H04N 19/146** (2014.01)

(52) Cooperative Patent Classification (CPC):
**H04N 19/124; H04N 19/14; H04N 19/146**

(86) International application number:
**PCT/CN2023/142308**

(87) International publication number:
**WO 2024/140792 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 CN 202211711937**

(71) Applicant: **Hangzhou Hikvision Digital
Technology Co., Ltd.
Hangzhou, Zhejiang 310051 (CN)**

(72) Inventors:
• **ZHANG, Hailong**
  **Hangzhou, Zhejiang 310051 (CN)**
• **GAO, Zaiwei**
  **Hangzhou, Zhejiang 310051 (CN)**
• **MA, Qiang**
  **Hangzhou, Zhejiang 310051 (CN)**

(74) Representative: **Michalski Hüttermann & Partner
Patentanwälte mbB
Kaistraße 16A
40221 Düsseldorf (DE)**

(54) **VIDEO DATA CODING METHOD AND APPARATUS, AND DEVICE**

(57)    The present application provides a video data coding method and apparatus, and a device. The method comprises: for a current adjustment period in a current long period, if the current long period is not the first long period of a coding process of video data, selecting a reference adjustment period from a previous long period of the current long period, wherein the position of the reference adjustment period in the previous long period is the same as the position of the current adjustment period in the current long period; on the basis of an actual bit rate corresponding to the reference adjustment period, determining a target bit rate corresponding to the current adjustment period, wherein the target bit rate represents an expected average bit rate in the current adjustment period; determining a target quantization parameter of the current adjustment period on the basis of the target bit rate; and in the current adjustment period, coding the video data on the basis of the target quantization parameter. According to the technical solution of the present application, a coding bit rate is controlled on the basis of the complexity of an actual scenario, and the bit rate control capability is improved.

In the encoding process of the video data, for a current adjustment interval in a current long-term period, if the current long-term period is not the first long-term period of the encoding process of the video data, selecting a reference adjustment interval from within a previous long-term period of the current long-term period, where a position of the reference adjustment interval in the previous long-term period is the same as a position of the current adjustment interval in the current long-term period — 101

Determining a target bitrate corresponding to the current adjustment interval based on an actual bitrate corresponding to the reference adjustment interval; where the target bitrate represents an expected average bitrate in the current adjustment interval — 102

Determining a target quantization parameter of the current adjustment interval based on the target bitrate — 103

Encoding the video data based on the target quantization parameter within the current adjustment interval — 104

FIG. 1

EP 4 645 857 A1

**Description**

**TECHNICAL FIELD**

The present disclosure relates to the technical field of encoding, and in particular, to a method and an apparatus for encoding video data, and a device.

**BACKGROUND**

The encoding of video data refers to: a process of encoding the video data by using a specific compression technology, to obtain a bitstream (i.e., encoded video data is referred to as a bitstream). Since the data amount of the bitstream is much reduced relative to that of the video data, transmitting and storing the code bitstream may save network bandwidth and improve the utilization rate of storage space.

In the related art, when video data is encoded, an encoding bitrate may be controlled in a Constant Bit Rate (CBR) manner, or an encoding bitrate may be controlled in a Variable Bit Rate (VBR) manner. When the encoding bitrate is controlled in the CBR manner, the bitrate after the encoding is fixed. When the encoding bitrate is controlled in the VBR manner, the bitrate after the encoding is less than a target bitrate, and the target bitrate fluctuates within a specific range, where the target bitrate is the maximum bitrate when the encoding bitrate is controlled in the VBR manner.

However, when the encoding bitrate is controlled in the CBR manner, since the bitrate after the encoding is fixed, quality is relatively low when a complex scene is encoded, and a bitrate is wasted when a simple scene is encoded. When the encoding bitrate is controlled in the VBR manner, since the target bitrate fluctuates within a specific range, the target bitrate is not controllable within a specific time, and when an image is complex, a bitrate of the image is limited by the target bitrate, and the bitrate of the image cannot be increased, which results in poor quality of the encoded image.

**SUMMARY**

The present disclosure provides a method for encoding video data, where an encoding process of the video data is divided into a plurality of long-term periods, each of the long-term periods is divided into K number of adjustment intervals, each of the long-term periods indicates a period in which a bitrate is expected to be fixed, each of the adjustment intervals indicates a period in which a bitrate changes along with an acquisition scene change of the video data, and the method includes: in the encoding process of the video data, for a current adjustment interval in a current long-term period, in response to the current long-term period being not a first long-term period of the encoding process of the video data, selecting a reference adjustment interval from a previous long-term period of the current long-term period, where a position of the reference adjustment interval in the previous long-term period is the same as a position of the current adjustment interval in the current long-term period, and a position of an adjustment interval in a long-term period represents which number of adjustment interval in the long-term period is the adjustment interval; and determining a target bitrate corresponding to the current adjustment interval based on an actual bitrate corresponding to the reference adjustment interval, where the actual bitrate represents a bitrate of an encoded bitstream when the video data is encoded in the reference adjustment interval, and the target bitrate represents an expected average bitrate in the current adjustment interval; determining a target Quantization Parameter (QP) of the current adjustment interval based on the target bitrate; and encoding the video data based on the target QP within the current adjustment interval.

For example, the determining a target bitrate corresponding to the current adjustment interval based on an actual bitrate corresponding to the reference adjustment interval includes: performing a normalization operation on the actual bitrate corresponding to each adjustment interval in the previous long-term period, to obtain a normalized bitrate corresponding to each adjustment interval, where the normalization operation is used to adjust the actual bitrates corresponding to all the adjustment intervals in the previous long-term period under a same QP reference, and the QP reference is a configured reference QP value; determining a proportional coefficient based on the normalized bitrate corresponding to the reference adjustment interval and a sum of the normalized bitrates corresponding to all the adjustment intervals in the previous long-term period, where the proportional coefficient represents a proportional value between the normalized bitrate corresponding to the reference adjustment interval and the sum of the normalized bitrates corresponding to all the adjustment intervals; and determining the target bitrate corresponding to the current adjustment interval based on a long-term-period bitrate, a long-term-period duration, and the proportional coefficient, where the long-term-period bitrate represents an expected average bitrate in the long-term period, the long-term-period bitrate corresponding to each of the long-term periods is a fixed value, and the long-term-period duration represents a total duration of the long-term period.

For example, the performing a normalization operation on the actual bitrate corresponding to each adjustment interval in the previous long-term period, to obtain a normalized bitrate corresponding to each adjustment interval includes: for each adjustment interval in the previous long-term period, determining a first QP corresponding to the adjustment interval based on a size and an actual QP of each encoded image in the adjustment interval and a total code length of the adjustment interval, where the first QP represents an average QP of the adjustment interval with a frame size as a weight, and the total code length represents a sum of sizes of all encoded images in the adjustment interval; determining a normalization adjustment coefficient corresponding to the adjustment interval based on the first QP, the configured reference QP value, and a bitrate change value caused per QP step, where the bitrate change value caused per QP step represents a bitrate change value caused by each unit of change in the QP; and performing the normalization operation on the actual bitrate corresponding to the adjustment interval based on the normalization adjustment coefficient corresponding to the adjustment interval, to obtain the normalized bitrate corresponding to the adjustment interval.

For example, the determining a first QP corresponding to the adjustment interval based on a size and an actual QP of each encoded image in the adjustment interval and a total code length of the adjustment interval includes determining the first QP corresponding to the adjustment interval by using a following formula:

$$\text{A/QP} = \frac{QP1 * FRM1 + \cdots + QPm * FRMm}{X}$$

where A/QP represents the first QP corresponding to the adjustment interval, QP1 represents the actual QP of a first frame of encoded image in the adjustment interval, FRM1 represents the size of the first frame of encoded image in the adjustment interval, QPm represents the actual QP of a m-th frame of encoded image in the adjustment interval, FRMm represents the size of the m-th frame of encoded image in the adjustment interval, X represents the total code length of the adjustment interval, and m is a positive integer greater than 1.

For example, the determining a normalization adjustment coefficient corresponding to the adjustment interval based on the first QP, the configured reference QP value, and a bitrate change value caused per QP step includes: determining the normalization adjustment coefficient corresponding to the adjustment interval by using a following formula:

$$\text{R} = p^{(A/QP-s)}$$

where R represents the normalization adjustment coefficient corresponding to the adjustment interval, p represents the bitrate change value caused per QP step, A/QP represents the first QP corresponding to the adjustment interval, and s represents the configured reference QP value.

For example, the performing the normalization operation on the actual bitrate corresponding to the adjustment interval based on the normalization adjustment coefficient corresponding to the adjustment interval, to obtain the normalized bitrate corresponding to the adjustment interval includes: determining the normalized bitrate corresponding to the adjustment interval by using a following formula:

$$\text{bpsA} = bps1 * \text{R}$$

where R represents the normalization adjustment coefficient corresponding to the adjustment interval, bps1 represents the actual bitrate corresponding to the adjustment interval, and bpsA represents the normalized bitrate corresponding to the adjustment interval.

For example, the determining a proportional coefficient based on the normalized bitrate corresponding to the reference adjustment interval and a sum of the normalized bitrates corresponding to all the adjustment intervals in the previous long-term period includes: determining the proportional coefficient corresponding to the adjustment interval by using a following formula:

$$\text{C} = \frac{bpsA}{bpsA + bpsB + \cdots + bpsZ}$$

where C represents the proportional coefficient corresponding to the adjustment interval, *bpsA* represents the normalized bitrate corresponding to the reference adjustment interval, and *bpsA* + *bpsB* + ... + *bpsZ* represents the sum of the normalized bitrates corresponding to all the adjustment intervals in the previous long-term period.

For example, the determining the target bitrate corresponding to the current adjustment interval based on a long-term-period bitrate, a long-term-period duration, and the proportional coefficient includes: determining the target bitrate corresponding to the current adjustment interval by using a following formula:

$$\mathrm{bpsa} = Y * T * C$$

where $Y$ represents the long-term-period bitrate, which is a pre-configured value or a value obtained by using an algorithm, $T$ represents the long-term-period duration, $C$ represents the proportional coefficient, and bpsa represents the target bitrate corresponding to the current adjustment interval.

For example, the determining a target bitrate corresponding to the current adjustment interval based on an actual bitrate corresponding to the reference adjustment interval includes: determining an initial bitrate corresponding to the current adjustment interval based on the actual bitrate corresponding to the reference adjustment interval; in response to the current long-term period being a second long-term period of the encoding process of the video data, determining the initial bitrate as the target bitrate corresponding to the current adjustment interval; or in response to the current long-term period being not the second long-term period of the encoding process of the video data, determining a quotient of the target bitrate corresponding to the reference adjustment interval and the actual bitrate corresponding to the reference adjustment interval as a bitrate coefficient, and determining a product of the initial bitrate and the bitrate coefficient as the target bitrate corresponding to the current adjustment interval.

For example, before determining the target QP of the current adjustment interval based on the target bitrate, the method further includes: in response to the current long-term period being the first long-term period of the encoding process of the video data, determining the target bitrate corresponding to the current adjustment interval based on a configured long-term-period bitrate; where in response to the current adjustment interval being a first adjustment interval in the current long-term period, determining the long-term-period bitrate as the target bitrate corresponding to the current adjustment interval; or in response to the current adjustment interval being not the first adjustment interval in the current long-term period, determining the target bitrate corresponding to the current adjustment interval based on the long-term-period bitrate, the long-term-period duration, a total quantity of actual code bits before the current adjustment interval, and a remaining duration of the current long-term period, where the total quantity of actual code bits represents total quantity of bits of the video data encoded before the current adjustment interval, and the remaining duration of the current long-term period represents a duration from the current adjustment interval to a last adjustment interval of the current long-term period.

For example, the determining the target bitrate corresponding to the current adjustment interval based on the long-term-period bitrate, a long-term-period duration, a total quantity of actual code bits before the current adjustment interval, and a remaining duration of the current long-term period includes: determining the target bitrate corresponding to the current adjustment interval based on a following formula:

Target bitrate = [long-term-period bitrate * long-term-period duration - total quantity of actual code bits] / remaining duration of the long-term period

For example, after encoding the video data based on the target QP within the current adjustment interval, the method further includes: selecting a reference adjustment interval from M number of long-term periods before the current long-term period respectively, M being a positive integer; determining an average length of normalized lengths of M number of selected reference adjustment intervals; in response to a change percentage of the normalized length of the current adjustment interval to the average length being greater than a first threshold, increasing a scene change score value; and in response to the scene change score value being greater than a second threshold, updating a next long-term period of the current long-term period to be a first long-term period, where the scene change score value is used to reflect whether a scene changes, and the scene change score value reflects that the scene changes when the scene change score value is greater than the second threshold;

A manner of determining the normalized length of the reference adjustment interval or the current adjustment interval includes: determining a second QP corresponding to the adjustment interval based on a size and an actual QP of each encoded image in the adjustment interval and a total code length of the adjustment interval, where the second QP represents an average QP of the adjustment interval with a frame size as a weight; determining a normalization adjustment coefficient corresponding to the adjustment interval based on the second QP, a configured reference QP value, and a bitrate change value caused per QP step; and performing a normalization operation on the total code length of the adjustment interval based on the normalization adjustment coefficient, to obtain the normalized length of the adjustment interval.

For example, the determining a target QP of the current adjustment interval based on the target bitrate includes: determining a variable adjustment bitrate corresponding to the current adjustment interval based on the target bitrate corresponding to the current adjustment interval and a scene motion level of the current adjustment interval, where the variable adjustment bitrate is less than or equal to the target bitrate, the scene motion level represents a motion degree of a moving object in a scene, and when the scene motion level is larger, the variable adjustment bitrate is larger, and the variable adjustment bitrate is a bitrate dynamically adjusted according to the motion degree of the moving object in the scene; in response to an actual bitrate corresponding to a QP of the current adjustment interval being greater than the variable adjustment bitrate, increasing the QP of the current adjustment interval to obtain the target QP of the current adjustment interval; and in response to the actual bitrate corresponding to the QP of the current adjustment interval being less than the variable adjustment bitrate, reducing the QP of the current adjustment interval to obtain the target QP of the current adjustment interval.

For example, the determining a variable adjustment bitrate corresponding to the current adjustment interval based on the target bitrate corresponding to the current adjustment interval and a scene motion level of the current adjustment interval includes: determining a configured proportional coefficient corresponding to the scene motion level, where the proportional coefficient is greater than 0 and less than or equal to 1, and the scene motion level is larger, the proportional coefficient is larger, and the scene motion level has a one-to-one correspondence with the proportional coefficient; and determining a product of the proportional coefficient and the target bitrate as the variable adjustment bitrate.

The present disclosure provides an apparatus for encoding video data, where an encoding process of the video data is divided into a plurality of long-term periods, each of the long-term periods is divided into K number of adjustment intervals, each of the long-term periods indicates a period in which a bitrate is expected to be fixed, each of the adjustment intervals indicates a period in which a bitrate changes along with an acquisition scene change of the video data, and the apparatus includes: a processing module, configured to: in the encoding process of the video data, for a current adjustment interval in a current long-term period, in response to the current long-term period being not a first long-term period of the encoding process of the video data, select a reference adjustment interval from a previous long-term period of the current long-term period, where a position of the reference adjustment interval in the previous long-term period is the same as a position of the current adjustment interval in the current long-term period, and a position of an adjustment interval in a long-term period represents which number of adjustment interval in the long-term period is the adjustment interval; and determine a target bitrate corresponding to the current adjustment interval based on an actual bitrate corresponding to the reference adjustment interval, where the actual bitrate represents a bitrate of an encoded bitstream when the video data is encoded in the reference adjustment interval, and the target bitrate represents an expected average bitrate in the current adjustment interval; a determining module, configured to: determine a target Quantization Parameter (QP) of the current adjustment interval based on the target bitrate; and an encoding module, configured to: encode the video data based on the target QP within the current adjustment interval.

For example, the processing module, when determining a target bitrate corresponding to the current adjustment interval based on an actual bitrate corresponding to the reference adjustment interval, is configured to: perform a normalization operation on the actual bitrate corresponding to each adjustment interval in the previous long-term period, to obtain a normalized bitrate corresponding to each adjustment interval, where the normalization operation is used to adjust the actual bitrates corresponding to all the adjustment intervals in the previous long-term period under a same QP reference, and the QP reference is a configured reference QP value; determine a proportional coefficient based on the normalized bitrate corresponding to the reference adjustment interval and a sum of the normalized bitrates corresponding to all the adjustment intervals in the previous long-term period, where the proportional coefficient represents a proportional value between the normalized bitrate corresponding to the reference adjustment interval and the sum of the normalized bitrates corresponding to all the adjustment intervals; and determine the target bitrate corresponding to the current adjustment interval based on a long-term-period bitrate, a long-term-period duration, and the proportional coefficient, where the long-term-period bitrate represents an expected average bitrate in the long-term period, the long-term-period bitrate corresponding to each of the long-term periods is a fixed value, and the long-term-period duration represents a total duration of the long-term period.

For example, the processing module, when performing a normalization operation on the actual bitrate corresponding to each adjustment interval in the previous long-term period, to obtain a normalized bitrate corresponding to each adjustment interval, is configured to: for each adjustment interval in the previous long-term period, determine a first QP corresponding to the adjustment interval based on a size and an actual QP of each encoded image in the adjustment interval and a total code length of the adjustment interval, where the first QP represents an average QP of the adjustment interval with a frame size as a weight, and the total code length represents a sum of sizes of all encoded images in the adjustment interval; determine a normalization adjustment coefficient corresponding to the adjustment interval based on the first QP, the configured reference QP value, and a bitrate change value caused per QP step, where the bitrate change value caused per QP step represents a bitrate change value caused by each unit of change in the QP; and perform the normalization operation on the actual bitrate corresponding to the adjustment interval based on the normalization adjustment coefficient corresponding to the adjustment interval, to obtain the normalized bitrate corresponding to the adjustment interval.

For example, the processing module, when determining a first QP corresponding to the adjustment interval based on a size and an actual QP of each encoded image in the adjustment interval and a total code length of the adjustment interval, is configured to: determine the first QP corresponding to the adjustment interval by using a following formula:

$$A/QP = \frac{QP1 * FRM1 + \cdots + QPm * FRMm}{X}$$

where A/QP represents the first QP corresponding to the adjustment interval, QP1 represents the actual QP of a first frame of encoded image in the adjustment interval, FRM1 represents the size of the first frame of encoded image in the adjustment interval, QPm represents the actual QP of a m-th frame of encoded image in the adjustment interval, FRMm represents the size of the m-th frame of encoded image in the adjustment interval, X represents the total code length of the adjustment interval, and m is a positive integer greater than 1.

For example, the processing module, when determining the normalization adjustment coefficient corresponding to the adjustment interval based on the first QP, the configured reference QP value, and the bitrate change value caused per QP step, is configured to: determine the normalization adjustment coefficient corresponding to the adjustment interval by using a following formula:

$$R = p^{(A/QP-s)}$$

where R represents the normalization adjustment coefficient corresponding to the adjustment interval, p represents the bitrate change value caused per QP step, A/QP represents the first QP corresponding to the adjustment interval, and s represents the configured reference QP value.

For example, the processing module, when performing the normalization operation on the actual bitrate corresponding to the adjustment interval based on the normalization adjustment coefficient corresponding to the adjustment interval, to obtain the normalized bitrate corresponding to the adjustment interval, is configured to: determine the normalized bitrate corresponding to the adjustment interval by using a following formula:

$$bpsA = bps1 * R$$

where R represents the normalization adjustment coefficient corresponding to the adjustment interval, $bps1$ represents the actual bitrate corresponding to the adjustment interval, and bpsA represents the normalized bitrate corresponding to the adjustment interval.

For example, the processing module, when determining a proportional coefficient based on the normalized bitrate corresponding to the reference adjustment interval and a sum of the normalized bitrates corresponding to all the adjustment intervals in the previous long-term period, is configured to: determine the proportional coefficient corresponding to the adjustment interval by using a following formula:

$$C = \frac{bpsA}{bpsA + bpsB + \cdots + bpsZ}$$

where C represents the proportional coefficient corresponding to the adjustment interval, $bpsA$ represents the normalized bitrate corresponding to the reference adjustment interval, and $bpsA + bpsb + ... + bpsZ$ represents the sum of the normalized bitrates corresponding to all the adjustment intervals in the previous long-term period.

For example, the processing module, when determining the target bitrate corresponding to the current adjustment interval based on a long-term-period bitrate, a long-term-period duration, and the proportional coefficient, is configured to: determine the target bitrate corresponding to the current adjustment interval by using a following formula:

$$bpsa = Y * T * C$$

where $Y$ represents the long-term-period bitrate, which is a pre-configured value or a value obtained by using an algorithm, T represents the long-term-period duration, C represents the proportional coefficient, and bpsa represents the target bitrate corresponding to the current adjustment interval.

For example, the processing module, when determining a target bitrate corresponding to the current adjustment interval based on an actual bitrate corresponding to the reference adjustment interval, is configured to: determine an initial bitrate corresponding to the current adjustment interval based on the actual bitrate corresponding to the reference adjustment interval; in response to the current long-term period being a second long-term period of the encoding process of the video data, determine the initial bitrate as the target bitrate corresponding to the current adjustment interval; or in response to the current long-term period being not the second long-term period of the encoding process of the video data, determine a quotient of the target bitrate corresponding to the reference adjustment interval and the actual bitrate corresponding to the reference adjustment interval as a bitrate coefficient, and determine a product of the initial bitrate and the bitrate coefficient as the target bitrate corresponding to the current adjustment interval.

For example, the processing module, before determining the target QP of the current adjustment interval based on the target bitrate, is further configured to: in response to the current long-term period being the first long-term period of the encoding process of the video data, determine the target bitrate corresponding to the current adjustment interval based on a configured long-term-period bitrate; in response to the current adjustment interval being a first adjustment interval in the current long-term period, determine the long-term-period bitrate as the target bitrate corresponding to the current adjustment interval; or in response to the current adjustment interval being not the first adjustment interval in the current long-term period, determine the target bitrate corresponding to the current adjustment interval based on the long-term-period bitrate, the long-term-period duration, a total quantity of actual code bits before the current adjustment interval, and a remaining duration of the current long-term period, where the total quantity of actual code bits represents total quantity of bits of the video data encoded before the current adjustment interval, and the remaining duration of the current long-term period represents a duration from the current adjustment interval to a last adjustment interval of the current long-term period.

For example, the processing module, when determining the target bitrate corresponding to the current adjustment interval based on the long-term-period bitrate, a long-term-period duration, a total quantity of actual code bits before the current adjustment interval, and a remaining duration of the current long-term period, is configured to: determine the target bitrate corresponding to the current adjustment interval based on a following formula: Target bitrate = [long-term-period bitrate * long-term-period duration - total quantity of actual code bits] / remaining duration of the long-term period.

For example, the processing module is further configured to: select a reference adjustment interval from M number of long-term periods before the current long-term period respectively, M being a positive integer; determine an average length of normalized lengths of M number of selected reference adjustment intervals; in response to a change percentage of the normalized length of the current adjustment interval to the average length being greater than a first threshold, increase a scene change score value; and in response to the scene change score value being greater than a second threshold, update a next long-term period of the current long-term period to be a first long-term period, where the scene change score value is used to reflect whether a scene changes, and the scene change score value reflects that the scene changes when the scene change score value is greater than the second threshold; where the processing module, when determining the normalized length of the reference adjustment interval or the current adjustment interval, is configured to: determine a second QP corresponding to the adjustment interval based on a size and an actual QP of each encoded image in the adjustment interval and a total code length of the adjustment interval, where the second QP represents an average QP of the adjustment interval with a frame size as a weight; determine a normalization adjustment coefficient corresponding to the adjustment interval based on the second QP, a configured reference QP value, and a bitrate change value caused per QP step; and perform a normalization operation on the total code length of the adjustment interval based on the normalization adjustment coefficient, to obtain the normalized length of the adjustment interval.

For example, the determining module, when determining a target QP of the current adjustment interval based on the target bitrate, is further configured to: determine a variable adjustment bitrate corresponding to the current adjustment interval based on the target bitrate corresponding to the current adjustment interval and a scene motion level of the current adjustment interval, where the variable adjustment bitrate is less than or equal to the target bitrate, the scene motion level represents a motion degree of a moving object in a scene, and when the scene motion level is larger, the variable adjustment bitrate is larger, and the variable adjustment bitrate is a bitrate dynamically adjusted according to the motion degree of the moving object in the scene; in response to an actual bitrate corresponding to a QP of the current adjustment interval being greater than the variable adjustment bitrate, increase the QP of the current adjustment interval to obtain the target QP of the current adjustment interval; and in response to the actual bitrate corresponding to the QP of the current adjustment interval being less than the variable adjustment bitrate, reduce the QP of the current adjustment interval to obtain the target QP of the current adjustment interval.

For example, the determining module, when determining a variable adjustment bitrate corresponding to the current adjustment interval based on the target bitrate corresponding to the current adjustment interval and a scene motion level of the current adjustment interval, is configured to: determine a configured proportional coefficient corresponding to the scene motion level, where the proportional coefficient is greater than 0 and less than or equal to 1, and the scene motion level is larger, the proportional coefficient is larger, and the scene motion level has a one-to-one correspondence with the proportional coefficient; and determine a product of the proportional coefficient and the target bitrate as the variable adjustment bitrate.

The present disclosure provides an electronic device, including: a processor and a machine-readable storage medium, where the machine-readable storage medium stores machine-executable instructions executable by the processor, and the processor is configured to execute the machine-executable instructions to implement the method for encoding video data in the foregoing examples.

It may be seen from the foregoing technical solutions that, in embodiments of the present disclosure, the target bitrate corresponding to the current adjustment interval may be determined based on the actual bitrate corresponding to the reference adjustment interval, to control the target bitrate corresponding to each adjustment interval, and the QP can be adjusted based on the target bitrate in the encoding process. In this way, the bitrate may be controlled based on the complexity of an actual scene, and thus there will be no situation where the quality is too low after a complex scene is encoded, or excessive bitrate is wasted after a simple scene is encoded, which improves the control capability of the bitrate. In addition, the target bitrate in the encoding process may be controlled, so that bitrate control is relatively stable, which avoids problems such as an unexpected bitrate. A higher bitrate is provided for the complex scene, and a lower bitrate is provided for the simple scene, so that bitrate utilization is more efficient, image quality is more stable, comprehensive image quality is better, and the bitrate may be expectable over a wide time scale.

## BRIEF DESCRIPTION OF DRAWINGS

FIG. 1 is a schematic flowchart of a method for encoding video data according to an embodiment of the present disclosure.
FIG. 2 is a schematic diagram of a long-term period, a short-term period, and an adjustment interval according to an embodiment of the present disclosure.
FIG. 3A - FIG. 3C are schematic diagrams of measured effects according to an embodiment of the present disclosure.
FIG. 4 is a schematic diagram of a motion level according to an embodiment of the present disclosure.
FIG. 5 is a schematic structure diagram of an apparatus for encoding video data according to an embodiment of the present disclosure.
FIG. 6 is a hardware structure diagram of an electronic device according to an embodiment of the present disclosure.

## DETAILED DESCRIPTION

Terms used in the embodiments of the present disclosure are merely intended to describe specific embodiments, but are not intended to limit the present disclosure. The singular forms "a", "said" and "the" used in the present disclosure and the claims are also intended to include plural forms, unless the context clearly represents other meanings. It will also be understood that the term "and/or" as used herein refers to any or all possible combinations of one or more of the associated listed items.

It should be understood that, although terms such as first, second, and third may be used to describe various information in the embodiments of the present disclosure, the information should not be limited to these terms. These terms are only used to distinguish the same type of information from each other. For example, without departing from the scope of the present disclosure, first information may also be referred to as second information, and similarly, second information may also be referred to as first information. Depending on the context, in addition, the word "if" used may be interpreted as "when", "upon", or "in response to determining".

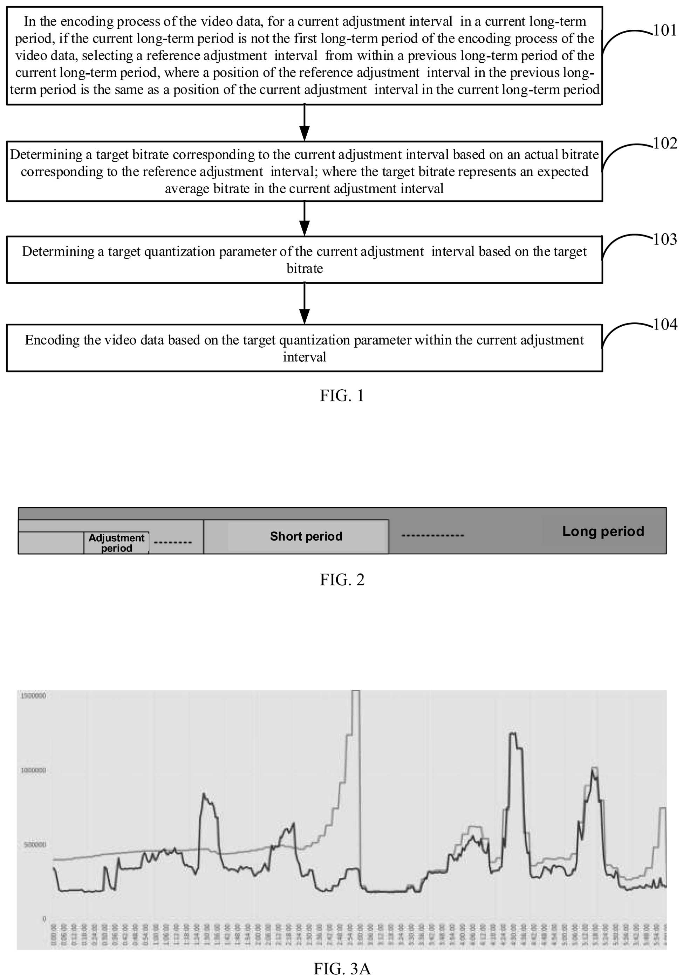

Embodiments of the present disclosure provide a method for encoding video data. An encoding process of the video data is divided into a plurality of long-term periods, each long-term period is divided into K number of adjustment intervals, K may be a positive integer greater than 1, or may be a non-positive integer, e.g., 2.5 or 3.5, where the long-term period indicates a period in which a bitrate is expected to be fixed, the adjustment interval indicates a period in which a bitrate changes along with an acquisition scene change of the video data. Refer to Fig.1, which is a schematic flowchart of the method for encoding video data. The method may include the following steps.

Step 101: in the encoding process of the video data, for a current adjustment interval in a current long-term period, if the current long-term period is not the first long-term period of the encoding process of the video data, a reference adjustment interval is selected from within a previous long-term period of the current long-term period, where a position of the reference adjustment interval in the previous long-term period is the same as a position of the current adjustment interval in the current long-term period, and a position of an adjustment interval in a long-term period represents which number of adjustment interval in the long-term period is the adjustment interval.

For example, the same position may mean that, if the current adjustment interval is the fifth adjustment interval in the current long-term period, then the reference adjustment interval is the fifth adjustment interval in the previous long-term period.

Step 102: a target bitrate corresponding to the current adjustment interval is determined based on an actual bitrate corresponding to the reference adjustment interval; where the actual bitrate represents a bitrate of an encoded bitstream (i.e., an encoded image) when the video data is encoded in the reference adjustment interval, and the target bitrate represents an expected average bitrate in the current adjustment interval.

In a possible implementation, to determine the target bitrate corresponding to the current adjustment interval, a normalization operation may be performed on an actual bitrate corresponding to each adjustment interval in the previous long-term period, to obtain a normalized bitrate corresponding to each adjustment interval, where the normalization operation is used to adjust actual bitrates corresponding to all adjustment intervals in the previous long-term period to a same Quantization Parameter (QP) reference, and the QP reference is a configured reference QP value. When a bitrate (e.g., an actual bitrate corresponding to each adjustment interval) is normalized, the bitrate needs to be normalized based on a QP reference (i.e., a reference QP), to obtain a normalized bitrate, i.e., the normalized bitrate represents the bitrate of the actual bitrate under the QP reference.

A proportional coefficient is determined based on the normalized bitrate corresponding to the reference adjustment interval and a sum of normalized bitrates corresponding to all adjustment intervals in the previous long-term period, where the proportional coefficient represents a proportional value between the normalized bitrate corresponding to the reference adjustment interval and the sum of the normalized bitrates corresponding to all the adjustment intervals. The target bitrate corresponding to the current adjustment interval is determined based on a long-term-period bitrate, a long-term-period duration, and the proportional coefficient, where the long-term-period bitrate represents an expected average bitrate in the long-term period, the long-term-period bitrates corresponding to all long-term periods are a fixed value, and the long-term-period duration represents a total duration of the long-term period.

Exemplarily, performing a normalization operation on an actual bitrate corresponding to each adjustment interval in the previous long-term period, to obtain a normalized bitrate corresponding to each adjustment interval may include, but is not limited to: for each adjustment interval in the previous long-term period, determining a first QP corresponding to the adjustment interval based on a size and an actual QP of each encoded image in the adjustment interval and a total code length of the adjustment interval, where the first QP represents an average QP of the adjustment interval when a frame size is used as a weight, and the total code length represents a sum of sizes of all encoded images in the adjustment interval. A normalization adjustment coefficient corresponding to the adjustment interval is determined based on the first QP, the configured reference QP value (a value preconfigured based on experiences), and a bitrate change value caused per QP step (a value preconfigured based on experiences); where the bitrate change value caused per QP step represents a bitrate change value caused by each unit of change (step) in the QP; and performing a normalization operation on the actual bitrate corresponding to the adjustment interval based on the normalization adjustment coefficient corresponding to the adjustment interval, to obtain the normalized bitrate corresponding to the adjustment interval.

Exemplarily, determining a target bitrate corresponding to the current adjustment interval based on an actual bitrate corresponding to the reference adjustment interval may include, but is not limited to: determining an initial bitrate corresponding to the current adjustment interval based on the actual bitrate corresponding to the reference adjustment interval, and directly determining the initial bitrate as the target bitrate corresponding to the current adjustment interval.

Alternatively, The initial bitrate corresponding to the current adjustment interval is determined based on the actual bitrate corresponding to the reference adjustment interval; if the current long-term period is the second long-term period of the encoding process of the video data, the initial bitrate may be determined as the target bitrate corresponding to the current adjustment interval; otherwise, if the current long-term period is not the second long-term period of the encoding process of the video data, a quotient of the target bitrate corresponding to the reference adjustment interval and the actual bitrate corresponding to the reference adjustment interval may be determined as a bitrate coefficient, and a product of the initial bitrate and the bitrate coefficient is determined as the target bitrate corresponding to the current adjustment interval.

In a possible implementation, if the current long-term period is the first long-term period in an encoding process of the video data, the target bitrate corresponding to the current adjustment interval may be determined based on a configured long-term-period bitrate. Exemplarily, if the current adjustment interval is the first adjustment interval in the current long-term period, the long-term-period bitrate may be determined as the target bitrate corresponding to the current adjustment interval; or if the current adjustment interval is not the first adjustment interval in the current long-term period, the target bitrate corresponding to the current adjustment interval may be determined based on the long-term-period bitrate, the long-term-period duration, a total quantity of actual code bits before the current adjustment interval, and a remaining duration of the current long-term period. The total quantity of actual code bits represents the total quantity of bits of the video data encoded before the current adjustment interval, and the remaining duration of the current long-term period represents a duration from the current adjustment interval to the last adjustment interval of the current long-term period. For example, the target bitrate corresponding to the current adjustment interval may be determined based on the following formula: target bitrate = [long-term-period bitrate * long-term-period duration - total quantity of actual code bits] / remaining duration of the long-term period.

Step 103: a target QP of the current adjustment interval is determined based on the target bitrate, where the target QP is used to reflect the compression of the video data, and when the target QP is smaller, the quantization is finer, the image quality is higher, and the bitrate is larger.

Exemplarily, a variable adjustment bitrate corresponding to the current adjustment interval may be determined based on the target bitrate corresponding to the current adjustment interval and a scene motion level of the current adjustment interval, where the variable adjustment bitrate is less than or equal to the target bitrate, the scene motion level represents a motion degree of a moving object in a scene, and when the scene motion level is larger, the variable adjustment bitrate may be larger, and the variable adjustment bitrate is a bitrate dynamically adjusted according to the motion degree of the moving object in the scene. For example, a configured proportional coefficient corresponding to the scene motion level is determined, where the proportional coefficient may be greater than 0, and the proportional coefficient may be less than or equal to 1; when the scene motion level is larger, the proportional coefficient corresponding to the scene motion level is larger, the scene motion levels have a one-to-one correspondence with the proportional coefficients. A product of the proportional coefficient and the target bitrate is determined as the variable adjustment bitrate.

If the actual bitrate corresponding to the QP of the current adjustment interval is greater than the variable adjustment bitrate, the QP of the current adjustment interval may be increased, to obtain the target QP of the current adjustment interval. Alternatively, if the actual bitrate corresponding to the QP of the current adjustment interval is less than the variable adjustment bitrate, the QP of the current adjustment interval may be reduced, to obtain the target QP of the current adjustment interval.

Step 104: the video data is encoded based on the target QP within the current adjustment interval.

In a possible implementation, in the current adjustment interval, after the video data is encoded based on the target QP, a reference adjustment interval may be further selected from M number of long-term periods before the current long-term period respectively, where M may be a positive integer. An average length of normalized lengths of the M number of selected reference adjustment intervals is determined; if a change percentage of the normalized length of the current adjustment interval to the average length is greater than a first threshold, a scene change score value is increased; and if the scene change score value is greater than a second threshold, the next long-term period of the current long-term period is updated to be the first long-term period, i.e., the foregoing process is repeated from the first long-term period. The scene change score value is used to reflect whether a scene changes, and the scene change score value reflects that the scene changes when the scene change score value is greater than the second threshold.

A manner of determining the normalized length of the reference adjustment interval or the current adjustment interval may include, but is not limited to: determining a second QP corresponding to the adjustment interval based on the size and the actual QP of each encoded image in the adjustment interval (i.e., any reference adjustment interval or current adjustment interval) and a total code length of the adjustment interval, where the second QP represents an average QP of the adjustment interval when a frame size is used as a weight; determining a normalization adjustment coefficient corresponding to the adjustment interval based on the second QP, the configured reference QP value, and a bitrate change value caused per QP step; and performing a normalization operation on the total code length of the adjustment interval based on the normalization adjustment coefficient, to obtain a normalized length of the adjustment interval.

It may be seen from the foregoing technical solutions that, in embodiments of the present disclosure, the target bitrate corresponding to the current adjustment interval may be determined based on the actual bitrate corresponding to the reference adjustment interval, to control the target bitrate corresponding to each adjustment interval, and the QP can be adjusted based on the target bitrate in the encoding process. In this way, the bitrate may be controlled based on the complexity of an actual scene, and thus there will be no situation where the quality is too low after a complex scene is encoded, or excessive bitrate is wasted after a simple scene is encoded, which improves the control capability of the bitrate. In addition, the target bitrate in the encoding process may be controlled, so that bitrate control is relatively stable, and problems such as an unexpected bitrate are avoided. A higher bitrate is provided for the complex scene, and a lower bitrate is provided for the simple scene, so that bitrate utilization is more efficient, image quality is more stable, comprehensive image quality is better, and the bitrate may be expectable over a wide time scale.

The following describes the foregoing technical solutions in the embodiments of the present disclosure with reference to specific application scenarios.

Embodiments of the present disclosure provide a method for encoding video data, where an encoding process of the video data may be divided into a plurality of long-term periods, each long-term period may include a plurality of short-term periods, and each long-term period may also include a plurality of adjustment intervals (an adjustment interval may also be referred to as an adjusting period). Referring to FIG. 2, which is a schematic diagram of a long-term period, a short-term period, and an adjustment interval, i.e., time of bitrate control may be divided into: long-term period, short-term period and adjustment interval. On a long-term period scale, constant bitrate is consumed, and in each adjustment interval within the long-term period, variable bitrate encoding is used. Alternatively, the encoding process of the video data may be divided into a plurality of long-term periods, each of the long-term periods may include a plurality of adjustment intervals, but no short-term periods.

Exemplarily, camera(s) may be communicatively connected to a hard disk video recorder. The camera may shoot the actual scenes within the shooting range, to obtain the video data, and send the video data to the hard disk video recorder, and the hard disk video recorder may encode, according to the method for encoding video data provided in the embodiments of the present disclosure, the video data sent by the camera, to obtain an encoded bitstream (the bitstream may also be referred to as recorded data or an encoded image), so as to store the bitstream. Alternatively, the camera may shoot the actual scene within the shooting range, to obtain the video data, and encode the video data according to the method for encoding video data provided in the embodiments of the present disclosure, to obtain an encoded bitstream. Then, the camera sends the encoded bitstream to the hard disk video recorder, and the hard disk video recorder receives and stores the encoded bitstream. The hard disk video recorder may be a high definition & hybrid digital video recorder (HVR), a digital video recorder (DVR), a network video recorder (NVR), etc.

Exemplarily, for the plurality of divided long-term periods, all the long-term periods may correspond to the same bitrate, the bitrate corresponding to all the long-term periods is referred to as a long-term-period bitrate, and the long-term-period bitrate is a fixed value, i.e., a long-term-period bitrate corresponding to each long-term period is fixed and does not change. Since long-term-period bitrates corresponding to all long-term-periods are a fixed value, a fixed long-term-period bitrate consumption is used on a long-term-period scale. To sum up, the long-term period indicates a period in which a bitrate is expected to be fixed, i.e., the period in which the bitrate is expected to be fixed is used as the long-term period. The long-term-period bitrate represents an expected average bitrate in the long-term period, i.e., the average bitrate in the long-term period is expected to be the long-term-period bitrate, and it should be noted that, the average bitrate is expected to be the long-term-period bitrate here, which does not mean that the average bitrate must be the long-term-period bitrate. For example, in an actual encoding process, an average bitrate in a long-term period may be greater than the long-term-period bitrate, or may be less than the long-term-period bitrate. The control goal of a long-term period is just to make the average bitrate in the long-term period as the long-term-period bitrate as much as possible.

Exemplarily, for each long-term period, the long-term period may include a plurality of short-term periods, i.e., the long-term period may be greater than the short-term period, for example, the long-term period may be set to several hours, and the short-term period may be set to several minutes, or the long-term period may be set to several days, and the short-term period may be set to several hours.

Exemplarily, for each long-term period, the long-term period may include a plurality of adjustment intervals, i.e., the long-term period may be greater than the adjustment interval. In addition, for each short-term period in the long-term period, the short-term period may include a plurality of adjustment intervals, i.e., the short-term period may be greater than the adjustment interval. For example, the long-term period may be set to several days, the short-term period may be set to several hours, and the adjustment interval may be set to several minutes. For example, the long-term period may be 24 hours, the short-term period may be 4 hours, and the adjustment interval may be 10 minutes. For example, the long-term period may include short-term period 1, short-term period 2, short-term period 3, and short-term period 4, the short-term period 1 may include adjustment interval 11, adjustment interval 12, adjustment interval 13, and adjustment interval 14, the short-term period 2 may include adjustment interval 21, adjustment interval 22, adjustment interval 23, and adjustment interval 24, and so on, i.e., the long-term period includes 4 short-term periods, each short-term period includes 4 adjustment intervals, and the long-term period includes 16 adjustment intervals.

Exemplarily, the adjustment interval indicates a period in which a bitrate changes along with an acquisition scene change of video data, i.e., when the acquisition scene of the video data changes, for example, when the scene motion level changes, the bitrate of the adjustment interval changes, and therefore, the period in which the bitrate changes along with the scene change is used as the adjustment interval.

For example, a bitrate corresponding to an adjustment interval may be referred to as a target bitrate, and target bitrates corresponding to different adjustment intervals may be the same or different, i.e., target bitrates corresponding to different adjustment intervals are variable values and may dynamically change. For a target bitrate corresponding to the same adjustment interval, the target bitrate is a fixed value, i.e., the target bitrate corresponding to the adjustment interval is fixed and does not change. The target bitrate represents an expected average bitrate in the adjustment interval, i.e., the average bitrate in the adjustment interval is expected to be the target bitrate, and it should be noted that, the average bitrate in the adjustment interval is the target bitrate here, which does not mean that the average bitrate in the adjustment interval must be the target bitrate. For example, in an actual encoding process, the average bitrate in the adjustment interval may be greater than the target bitrate, or may be less than the target bitrate, and the control goal of the adjustment interval is to make the average bitrate in the adjustment interval as the target bitrate as much as possible.

Exemplarily, for short-term periods and adjustment intervals within a long-term period, variable bitrate may be used for encoding, and different bitrate control adjustments may be performed for long-term periods, short-term periods and adjustment intervals. For example, only a long-term-period bitrate is set for each of the long-term periods, and the long-term-period bitrate is a fixed value. The long-term-period bitrate is restored to the fixed value in each long-term period, and the long-term-period bitrate may be configured based on experiences, e.g., 400 Kbps, i.e., the long-term-period bitrate is restored to 400 Kbps in each long-term period. In each short-term period in the long-term period, the Quantization Parameter (QP) range may be dynamically adjusted, for example, the QP range may be increased or may be reduced, so as to be used for bitrate compensation in complex and simple scenes during the short-term periods. In each adjustment interval in the long-term period, a target bitrate corresponding to the adjustment interval may be determined, then a QP is determined based on the target bitrate and a QP range, and video data is encoded based on the QP. The QP may be a quantizer parameter (QP) etc., and the QP is used to reflect a compression of spatial details, and when the QP is smaller, the quantization is finer, the image quality is higher, and the bitstream is longer.

In the foregoing application scenarios, the method for encoding video data provided in the embodiments of the present disclosure may include as follows.

1. Determining target bitrate corresponding to each adjustment interval

Case 1: For each adjustment interval in the first long-term period, a target bitrate corresponding to each adjustment interval may be determined in the following manner: for a current adjustment interval in the first long-term period, a target bitrate corresponding to the current adjustment interval may be determined based on a configured long-term-period bitrate. Exemplarily, if the current adjustment interval is the first adjustment interval in the long-term period, the long-term-period bitrate may be determined as the target bitrate corresponding to the current adjustment interval. Alternatively, if the current adjustment interval is not the first adjustment interval in the long-term period, the target bitrate corresponding to the current adjustment interval may be determined based on the long-term-period bitrate, the long-term-period duration (i.e., the total duration corresponding to the long-term period), the total quantity of actual code bits before the current adjustment interval in the long-term period (i.e., the total quantity of bits of the video data encoded before the current adjustment interval), and the remaining duration of the long-term period (i.e., the duration from the current adjustment interval to the last adjustment interval of the current long-term period). For example, the target bitrate corresponding to the current adjustment interval may be determined based on the following formula: target bitrate = [long-term-period bitrate * long-term-period duration - total quantity of actual code bits] / remaining duration of the long-term period.

For example, assuming that the long-term-period bitrate is 400 Kbps, and the long-term period includes adjustment interval 1 - adjustment interval 16 (i.e., there are 16 adjustment intervals), for adjustment interval 1, the long-term-period bitrate 400 Kbps is determined as the target bitrate corresponding to adjustment interval 1. For adjustment interval 2, the target bitrate corresponding to adjustment interval 2 is determined by using the following formula: target bitrate = [400 Kbps * long-term-period duration - total quantity of code for past time (Kb)] / remaining time. 400 Kbps represents the long-term-period bitrate, the long-term-period duration represents the total duration corresponding to the long-term period (i.e., the total duration of 16 adjustment intervals), the total quantity of code for past time represents the total quantity of actual code bits before adjustment interval 2 (i.e., the total quantity of actual code bits of adjustment interval 1), and the remaining time represents the remaining duration of the long-term period (i.e., the total duration of adjustment interval 2 - adjustment interval 16). Obviously, if the average bitrate corresponding to adjustment interval 1 is greater than 400 Kbps, the target bitrate corresponding to adjustment interval 2 is less than 400 Kbps; if the average bitrate corresponding to adjustment interval 1 is less than 400 Kbps, the target bitrate corresponding to adjustment interval 2 is greater than 400 Kbps, that is to say, when the adjustment interval that has completed encoding uses more average bitrate (i.e., the total quantity of actual code bits is larger), the target bitrates corresponding to the remaining adjustment intervals are decreased, and when the adjustment interval that has completed encoding uses less average bitrate (i.e., the total quantity of actual code bits is smaller), the target bitrates corresponding to the remaining adjustment intervals are increased. And so on, a target bitrate corresponding to each adjustment interval in the long-term period may be obtained.

Case 2: For each adjustment interval in the non-first long-term period (i.e., the second long-term period and the subsequent long-term periods), the target bitrate corresponding to the adjustment interval may be determined by using the following steps described below.

Step S11: for each adjustment interval in the previous long-term period of the current long-term period, the first QP corresponding to the adjustment interval is determined based on the size and the actual QP of each encoded image in the adjustment interval and the total code length of the adjustment interval, where the first QP represents an average QP of the adjustment interval when a frame size is used as a weight, i.e., an average QP when a frame size is used as a weight, and the total code length represents a sum of sizes of all encoded images in the adjustment interval.

For example, assuming that the plurality of divided long-term periods sequentially include long-term period 1, long-term period 2, long-term period 3, long-term period 4,..., when the current long-term period is long-term period 2, the previous long-term period is long-term period 1; when the current long-term period is long-term period 3, the previous long-term period is long-term period 2, and so on.

For example, the current long-term period is long-term period 3, the previous long-term period is long-term period 2, assuming that the current long-term period may sequentially include four adjustment intervals, namely adjustment interval 3-1, adjustment interval 3-2, adjustment interval 3-3, and adjustment interval 3-4, the previous long-term period may sequentially include four adjustment intervals, namely adjustment interval 2-1, adjustment interval 2-2, adjustment interval 2-3, and adjustment interval 2-4.

On this basis, the first QP corresponding to adjustment interval 2-1 may be determined based on the size and the actual QP of each encoded image in adjustment interval 2-1 and the total code length of adjustment interval 2-1, and similarly, the first QP corresponding to adjustment interval 2-2, the first QP corresponding to adjustment interval 2-3, and the first QP corresponding to adjustment interval 2-4 may be obtained.

In a possible implementation, the first QP corresponding to the adjustment interval may be determined by using the formula (1) below. Certainly, formula (1) is merely an example, which is not limited herein.

$$A1/QP = \frac{QP1*FRM1+QP2*FRM2+\cdots+QPm*FRMm}{X} \qquad \text{Formula (1)}$$

In formula (1), A1/QP represents the first QP corresponding to adjustment interval 2-1. QP1 represents the actual QP of the first frame of encoded image in adjustment interval 2-1, FRM 1 represents the size of the first frame of encoded image in adjustment interval 2-1, and so on. QPm represents the actual QP of the m-th frame of encoded image in adjustment interval 2-1, FRMm represents the size of the m-th frame of encoded image in adjustment interval 2-1, and m represents the total quantity of encoded images in adjustment interval 2-1. X represents the total code length of adjustment interval 2-1. To sum up, the first QP A1/QP corresponding to adjustment interval 2-1 may be determined based on the size and the actual QP of each encoded image in adjustment interval 2-1 and the total code length of adjustment interval 2-1. Similarly, the first QP A2/QP corresponding to adjustment interval 2-2 may be obtained, and so on.

Step S12: a normalization adjustment coefficient corresponding to the adjustment interval is determined based on the first QP corresponding to adjustment interval, the configured reference QP value, and a bitrate change value caused per QP step. The bitrate change value caused per QP step represents a bitrate change value caused by each unit of change in the QP.

For example, the normalization adjustment coefficient R1 corresponding to adjustment interval 2-1 may be determined based on the first QP A1/QP corresponding to adjustment interval 2-1, the reference QP value, and the bitrate change value caused per QP step; the normalization adjustment coefficient R2 corresponding to adjustment interval 2-2 may be determined based on the first QP A2/QP corresponding to adjustment interval 2-2, the reference QP value, and the bitrate change value caused per QP step; and so on.

In a possible implementation, the normalization adjustment coefficient corresponding to the adjustment interval may be determined by using the formula (2) below. Certainly, formula (2) is merely an example, which is not limited herein.

$$R1 = p^{(A1/QP-33)} \qquad \text{Formula (2)}$$

In formula (2), R1 represents a normalization adjustment coefficient corresponding to adjustment interval 2-1, p represents a bitrate change value caused per QP step, which may be an empirical value, e.g., 1/6, 1/8, 1.1225, etc., which is not limited, 33 represents a configured reference QP value, which is configured according to experiences and is not limited. It should be noted that, the reference QP value is a QP reference, and in a normalization process, a bitrate needs to be adjusted to the QP reference.

Step S13: a normalization operation on the actual bitrate corresponding to the adjustment interval is performed based on the normalization adjustment coefficient corresponding to the adjustment interval, to obtain the normalized bitrate corresponding to the adjustment interval. For example, the normalization operation is used to adjust the actual bitrate corresponding to the adjustment interval to the same QP reference, to obtain a normalized bitrate corresponding to the adjustment interval. For example, when an actual bitrate corresponding to an adjustment interval is normalized, the actual bitrate needs to be normalized under a QP reference, to obtain a normalized bitrate, where the normalized bitrate represents the bitrate of the actual bitrate under the QP reference.

For example, since the encoding process of the adjustment interval 2-1 has been completed, an actual bitrate (also referred to as an actual encoding bitrate, the actual bitrate represents a bitrate of an encoded bitstream when the video data is encoded in the adjustment interval) corresponding to adjustment interval 2-1 may be counted, where the actual bitrate represents a bitrate corresponding to an actual bitstream length of adjustment interval 2-1, i.e., the actual bitrate corresponding to adjustment interval 2-1 is determined based on the actual bitstream length and the duration of adjustment interval 2-1, and the actual bitrate corresponding to adjustment interval 2-1 is denoted as bps1. On this basis, a normalization operation may be performed on the actual bitrate bps1 corresponding to adjustment interval 2-1 based on the normalization adjustment coefficient R1 corresponding to adjustment interval 2-1, to obtain a normalized bitrate bpsA corresponding to adjustment interval 2-1, i.e., the actual bitrate bps1 corresponding to adjustment interval 2-1 is normalized to the normalized bitrate bpsA under the QP reference based on the QP reference, where the QP reference may be a configured reference QP value. In a possible implementation, the normalized bitrate bpsA may be determined by using the formula (3) below. Certainly, formula (3) is merely an example, which is not limited herein.

$$bpsA = bps1 * R1 \qquad \text{Formula (3)}$$

Similarly, a normalization operation may be performed on the actual bitrate bps2 corresponding to adjustment interval 2-2 based on the normalization adjustment coefficient R2 corresponding to adjustment interval 2-2, to obtain a normalized bitrate bpsB corresponding to adjustment interval 2-2, and so on, the normalized bitrate corresponding to each adjustment interval in the previous long-term period may be obtained.

To sum up, assuming that each long-term period includes K number of adjustment intervals, normalized bitrates corresponding to K number of adjustment intervals in the previous long-term period may be obtained, and the normalized bitrates are used to adjust actual bitrates corresponding to all adjustment intervals in the previous long-term period to a same QP reference (i.e., a reference QP value).

Step S14: for a current adjustment interval in the current long-term period, a reference adjustment interval corresponding to the current adjustment interval is selected from a previous long-term period. Exemplarily, the position of the reference adjustment interval in the previous long-term period may be the same as the position of the current adjustment interval in the current long-term period. The position of the adjustment interval within the long-term period represents which number of adjustment interval in the long-term period is the adjustment interval. For example, assuming that the current adjustment interval is adjustment interval 3-1 in the current long-term period, the reference adjustment interval is adjustment interval 2-1 in the previous long-term period, assuming that the current adjustment interval is adjustment interval 3-2 in the current long-term period, the reference adjustment interval is adjustment interval 2-2 in the previous long-term period, and so on.

Step S15: a proportional coefficient corresponding to the current adjustment interval is determined based on the normalized bitrate corresponding to the actual bitrate corresponding to the reference adjustment interval and a sum of normalized bitrates corresponding to all adjustment intervals in the previous long-term period. The proportional coefficient represents a proportional value between the normalized bitrate corresponding to the reference adjustment interval and the sum of normalized bitrates corresponding to all adjustment intervals.

For example, the proportional coefficient corresponding to adjustment interval 3-1 is determined based on the normalized bitrate corresponding to the actual bitrate corresponding to adjustment interval 2-1 and the sum of the normalized bitrates corresponding to all the adjustment intervals in long-term period 2; the proportional coefficient corresponding to adjustment interval 3-2 is determined based on the normalized bitrate corresponding to the actual bitrate corresponding to adjustment interval 2-2 and the sum of the normalized bitrates corresponding to all the adjustment intervals in long-term period 2, and so on.

In a possible implementation, the proportional coefficient C1 corresponding to adjustment interval 3-1 may be determined by using the formula (4) below, the proportional coefficient C2 corresponding to adjustment interval 3-2 may be determined by using the formula (5) below, and so on. Certainly, formula (4) and formula (5) are merely examples, which are not limited herein.

$$C1 = \frac{bpsA}{bpsA + bpsB + \cdots + bpsZ} \qquad \text{Formula (4)}$$

$$C2 = \frac{bpsB}{bpsA + bpsB + \cdots + bpsZ} \qquad \text{Formula (5)}$$

As may be seen from formula (4) and formula (5) that, the proportional coefficient C1 corresponding to adjustment interval 3-1 is determined based on the normalized bitrate bpsA corresponding to adjustment interval 2-1 and the sum $(bpsA + bpsB + \cdots + bpsZ)$ of the normalized bitrates corresponding to all the adjustment intervals, and the proportional coefficient C2 corresponding to adjustment interval 3-2 is determined based on the normalized bitrate *bpsb* corresponding to adjustment interval 2-2 and the sum of the normalized bitrates corresponding to all the adjustment intervals.

Step S16: the target bitrate corresponding to the current adjustment interval is determined based on a long-term-period bitrate, a long-term-period duration, and the proportional coefficient corresponding to the current adjustment interval, where the long-term-period bitrate represents an expected average bitrate in the long-term period, long-term-period bitrates corresponding to all long-term periods are a fixed value, and the long-term-period duration represents a total duration of the long-term period.

For example, if the current adjustment interval is adjustment interval 3-1, the target bitrate bpsa corresponding to adjustment interval 3-1 is determined based on the long-term-period bitrate, the long-term-period duration, and the proportional coefficient C1 corresponding to the adjustment interval 3-1. If the current adjustment interval is adjustment interval 3-2, the target bitrate bpsb corresponding to adjustment interval 3-2 is determined based on the long-term-period bitrate, the long-term-period duration, and the proportional coefficient C2 corresponding to adjustment interval 3-2, and so on.

In a possible implementation, the target bitrate bpsa corresponding to adjustment interval 3-1 may be determined by using the formula (6) below. Certainly, formula (6) is merely an example, which is not limited herein.

$$bpsa = 400Kbps * T * \frac{bpsA}{bpsA + bpsB + \cdots + bpsZ} \qquad \text{Formula (6)}$$

In formula (6), 400*Kbps* represents the long-term-period bitrate, and may be configured based on experiences or obtained by using an algorithm, which is not limited herein, and T represents the long-term-period duration, i.e., total duration of the long-term period.

To sum up, for each adjustment interval in the current long-term period, when the adjustment interval is used as the current adjustment interval, the target bitrate corresponding to the adjustment interval may be obtained by using the foregoing steps.

Referring to FIG. 3A, which is a schematic diagram of measured effects, assuming that a long-term-period duration is 3 hours, a short-period duration is 20 minutes, and an adjustment-period duration is 4 minutes. FIG. 3A is a schematic diagram of bitrate effects of two long-term periods, in which the horizontal axis may be the time axis for a total of 6 hours, the vertical axis may represent the bitrate, and a long-term-period bitrate corresponding to the long-term period is 400 Kbps. FIG. 3A shows an actual bitrate corresponding to the adjustment interval and a target bitrate corresponding to the adjustment interval. As may be seen from FIG. 3A, since there is no corresponding reference data in the first long-term period, the target bitrate corresponding to each adjustment interval is determined according to the long-term-period bitrate 400 Kbps, no more bitrate is given when the image is complex, and no lower bitrate is given when the image is simple. Since there is corresponding reference data (for example, an actual bitrate corresponding to each adjustment interval in the first long-term period) in the second long-term period, the target bitrate corresponding to each adjustment interval in the second long-term period may be determined according to step S11 - step S15, i.e., the target bitrate of each adjustment interval in the second long-term period is adjusted, so that more bitrate can be given when the image is complex, and lower bitrate can be given when the image is simple, which enables bitrate utilization to be more efficient.

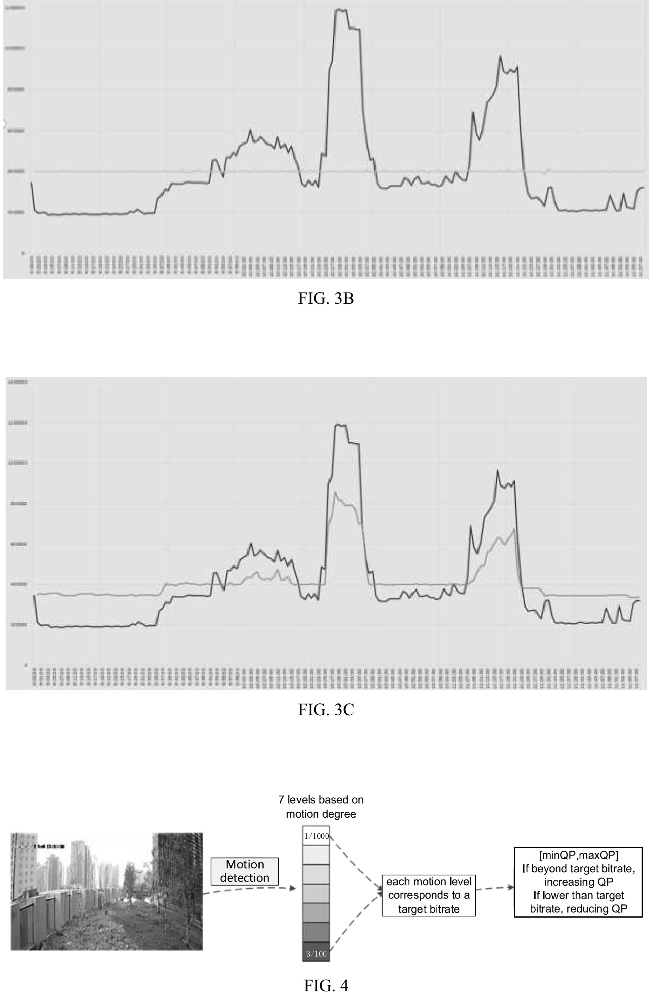

Referring to FIG. 3B, which is a schematic diagram of a scene-learning bitrate control algorithm (i.e., the bitrate control algorithm of the present disclosure) compared to the CBR algorithm. As may be seen from FIG. 3B, compared to the CBR algorithm, the scene-learning bitrate control algorithm has more stable image quality, better comprehensive image quality, and an expectable bitrate on a wide time scale.

Referring to FIG. 3C, which is a schematic diagram of a scene-learning bitrate control algorithm (i.e., the bitrate control algorithm of the present disclosure) compared to the VBR algorithm. As may be seen from FIG. 3C, compared to the VBR algorithm, the scene-learning bitrate control algorithm has higher bitrate utilization, more stable image quality, and an expectable bitrate on a wide time scale.

2. Determining target bitrate corresponding to each adjustment interval

As may be seen from FIG. 3A, FIG. 3B, and FIG. 3C, the target bitrate is pulled up at the tail of both of the two long-term periods. And for the adjustment interval at the tail of the first long-term period, when the remaining duration of the long-term period is relatively small and the bitrate is not used up, the target bitrate corresponding to the adjustment interval is quickly pulled up. For the adjustment interval at the tail of the second long-term period (and subsequent long-term periods), since each adjustment interval is controlled by using the variable adjustment bitrate, the variable adjustment bitrate is determined based on the motion level, the variable adjustment bitrate corresponding to the maximum motion level is the target bitrate, and when the motion level is relatively small, the variable adjustment bitrate is less than the target bitrate, i.e., the motion level directly affects the target bitrate. In this way, each adjustment interval of the second long-term period will not always be controlled according to the maximum target bitrate, and the target bitrate will be pulled up in the adjustment interval at the tail.

Exemplarily, a phenomenon of pulling up the target bitrate corresponding to the tail of the long-term period may be referred to as a tail effect, and in order to process the tail effect and avoid the phenomenon of pulling up the target bitrate, the manner described below may also be used in this embodiment.

For each adjustment interval in the first long-term period, to determine the target bitrate corresponding to each adjustment interval, case 1 of the first point may be referred to.

For each adjustment interval in the second long-term period, to determine the target bitrate corresponding to each adjustment interval, case 2 of the first point may be referred to. For example, an initial bitrate corresponding to the current adjustment interval (e.g., each adjustment interval in the second long-term period) is determined based on the actual bitrate corresponding to the reference adjustment interval, and the initial bitrate is directly determined as the target bitrate corresponding to the current adjustment interval.

For each adjustment interval in the third long-term period and subsequent long-term periods, to determine the target bitrate corresponding to each adjustment interval, the steps described below may be used to determine the target bitrate corresponding to each adjustment interval:

Step S21: for each adjustment interval in the previous long-term period of the current long-term period, the first QP corresponding to the adjustment interval is determined based on the size and the actual QP of each encoded image in the adjustment interval and a total code length of the adjustment interval, where the first QP represents an average QP of the adjustment interval when a frame size is used as a weight, i.e., an average QP when a frame size is used as a weight.

Step S22: a normalization adjustment coefficient corresponding to the adjustment interval is determined based on the first QP corresponding to the adjustment interval, the configured reference QP value, and a bitrate change value caused per QP step.

Step S23: a normalization operation is performed on the actual bitrate corresponding to the adjustment interval based on the normalization adjustment coefficient corresponding to the adjustment interval, to obtain the normalized bitrate corresponding to the adjustment interval.

Step S24: for a current adjustment interval in the current long-term period, a reference adjustment interval corresponding to the current adjustment interval is selected from the previous long-term period. Exemplarily, the position of the reference adjustment interval in the previous long-term period may be the same as the position of the current adjustment interval in the current long-term period.

Step S25: a proportional coefficient corresponding to the current adjustment interval is determined based on the normalized bitrate corresponding to the reference adjustment interval and a sum of normalized bitrates corresponding to all adjustment intervals in the previous long-term period.

Step S26: an initial bitrate corresponding to the current adjustment interval is determined based on the long-term-period bitrate (i.e., the expected average bitrate in the long-term period), the long-term-period duration (i.e., the total duration of the long-term period), and the proportional coefficient corresponding to the current adjustment interval. The determining manner refers to the manner of determining the target bitrate in step S16, which is not repeated here.

To sum up, based on step S21 - step S26, the initial bitrate corresponding to the current adjustment interval may be determined based on the actual bitrate corresponding to the reference adjustment interval, referring to step S11 - step S16 for an implementation.

Step S27: a bitrate coefficient is determined based on the target bitrate corresponding to the reference adjustment interval and the actual bitrate corresponding to the reference adjustment interval, and the target bitrate corresponding to the current adjustment interval is determined based on the initial bitrate corresponding to the current adjustment interval and the bitrate coefficient. For example, a product value of the initial bitrate corresponding to the current adjustment interval and the bitrate coefficient is determined as the target bitrate corresponding to the current adjustment interval.

For example, if the current adjustment interval is adjustment interval 3-1, and the reference adjustment interval is adjustment interval 2-1, the bitrate coefficient D1 is determined based on the target bitrate and the actual bitrate corresponding to adjustment interval 2-1, and the target bitrate corresponding to adjustment interval 3-1 is determined based on the initial bitrate corresponding to adjustment interval 3-1 and the bitrate coefficient D1. If the current adjustment interval is adjustment interval 3-2, and the reference adjustment interval is adjustment interval 2-2, the bitrate coefficient D2 is determined based on the target bitrate and the actual bitrate corresponding to adjustment interval 2-2, and the target bitrate corresponding to adjustment interval 3-2 is determined based on the initial bitrate corresponding to adjustment interval 3-2 and the bitrate coefficient D2, and so on.

In a possible implementation, if the current adjustment interval is adjustment interval 3-1, the formula (7) below may be used to determine the bitrate coefficient D1, and the formula (8) below may be used to determine the target bitrate corresponding to adjustment interval 3-1. Certainly, formula (7) and formula (8) are merely examples, which are not limited herein.

$$D1 = \frac{bpsa}{bps1} \qquad \text{Formula (7)}$$

$$bpsa'' = bpsa' * \frac{bpsa}{bps1} \qquad \text{Formula (8)}$$

In formula (7) and formula (8), $bpsa$ represents the target bitrate corresponding to reference adjustment interval 2-1, $bps1$ represents the actual bitrate corresponding to reference adjustment interval 2-1, D1 represents the bitrate coefficient, $bpsa'$ represents the initial bitrate corresponding to current adjustment interval 3-1, and $bpsa''$ represents the target bitrate corresponding to current adjustment interval 3-1. So far, the target bitrate corresponding to the current adjustment interval 3-1 is obtained, and the target bitrate corresponding to each adjustment interval may be obtained in the same manner, and the tail effect of the target bitrate has been improved.

3. Controlling encoding process of video data based on target bitrate

Exemplarily, the steps described below may be used to control an encoding process of the video data.

Step S31: a variable adjustment bitrate corresponding to the current adjustment interval is determined based on the target bitrate corresponding to the current adjustment interval and a scene motion level of the current adjustment interval. The variable adjustment bitrate is less than or equal to the target bitrate, the scene motion level represents a motion degree of a moving object in the scene, and when the scene motion level is larger, the motion degree of the current scene is larger, and the variable adjustment bitrate is larger. When the scene motion level is smaller, the motion degree of the current scene is smaller, the variable adjustment bitrate is also smaller, and the variable adjustment bitrate is a bitrate dynamically adjusted according to the motion degree of the moving object in the scene.

Exemplarily, in the current adjustment interval, the variable adjustment bitrate may be dynamically adjusted based on an actual motion of the scene, and in an adjustment process, different variable adjustment bitrates may be set based on the motion degree, e.g., when the actual motion of the scene is complex, the variable adjustment bitrate becomes larger, and when the actual motion of the scene is simple, the variable adjustment bitrate becomes smaller. Since the variable adjustment bitrate is a dynamic adjustment value, the actual average bitrate in each adjustment interval can be controlled, so as to control the encoding bitrate according to the complexity of the actual scene, and thus there will be no situation where the quality is too low after a complex scene is encoded, or excessive bitrate is wasted after a simple scene is encoded.

Exemplarily, after the variable adjustment bitrate is determined based on the target bitrate and the scene motion level corresponding to the current adjustment interval, when the scene motion level corresponding to the current adjustment interval changes, the variable adjustment bitrate corresponding to the current adjustment interval may further be re-determined based on the target bitrate and the changed scene motion level.

Exemplarily, determining the variable adjustment bitrate corresponding to the current adjustment interval based on the target bitrate and the scene motion level may include: determining a configured proportional coefficient corresponding to the scene motion level, where the proportional coefficient may be greater than 0, and less than or equal to 1; when the scene motion level is larger, the proportional coefficient corresponding to the scene motion level is larger, and the scene motion levels have a one-to-one correspondence with the proportional coefficients. The variable adjustment bitrate may be determined based on a product of the proportional coefficient and the target bitrate.

For example, K number of scene motion levels may be divided in advance, where K is a positive integer greater than 1, e.g., 3 scene motion levels, 5 scene motion levels, or 7 scene motion levels, etc. For the convenience of description, taking 7 scene motion levels as examples, these 7 scene motion levels are recorded as scene motion level 1 - scene motion level 7. Among these seven scene motion levels, the motion degree corresponding to scene motion level 1 is the smallest, and the motion degree corresponding to scene motion level 7 is the largest. A mapping relationship between scene motion levels and proportional coefficients may be preconfigured, and the proportional coefficient may be a value between 0-1, i.e., greater than 0 and less than or equal to 1. When the motion degree corresponding to the scene motion level is smaller, the proportional coefficient corresponding to the scene motion level is smaller, and when the motion degree corresponding to the scene motion level is larger, the proportional coefficient corresponding to the scene motion level is larger.

For example, the proportional coefficient corresponding to scene motion level 1 is less than the proportional coefficient corresponding to scene motion level 2, the proportional coefficient corresponding to scene motion level 2 is less than the proportional coefficient corresponding to scene motion level 3, and so on. Referring to Table 1, which is an example of the mapping relationship between the scene motion levels and the proportional coefficients.

Table 1

| Scene motion level | Proportional coefficient |
|---|---|
| scene motion level 7 | 1 |
| scene motion level 6 | 0.875 |
| scene motion level 5 | 0.75 |
| scene motion level 4 | 0.625 |
| scene motion level 3 | 0.5 |
| scene motion level 2 | 0.375 |
| scene motion level 1 | 0.25 |

In Table 1, the proportional coefficient corresponding to scene motion level 7 is 1, indicating that the variable adjustment bitrate corresponding to the highest scene motion level is the target bitrate. The proportional coefficient corresponding to scene motion level 1 is 0.25, indicating that the variable adjustment bitrate corresponding to the lowest scene motion level is the target bitrate * 0.25.

For the current adjustment interval, the current adjustment interval may be divided into a plurality of sampling periods, and in each sampling period, a scene motion level of the current sampling period may be determined, where the scene motion level is used to reflect an actual motion in the current sampling period, i.e., a motion degree of the current scene, e.g., the scene motion level of the current sampling period is obtained based on image analysis, and there are no restrictions on this process, as long as the scene motion level can be obtained. After the scene motion level of the current sampling period is obtained, the mapping relationship shown in Table 1 may be queried to obtain the proportional coefficient corresponding to the scene motion level, and the variable adjustment bitrate of the next sampling period of the current sampling period is determined based on the product of the proportional coefficient and the target bitrate corresponding to the current adjustment interval.

For example, the adjustment interval may be divided into: sampling period 1, sampling period 2, sampling period 3,..., and in sampling period 1, a scene motion level of the sampling period 1 is determined, e.g., scene motion level 7, where the proportional coefficient corresponding to scene motion level 7 is 1, and assuming that the target bitrate corresponding to the current adjustment interval is 400 Kbps, the variable adjustment bitrate of sampling period 2 is 400 Kbps. In sampling period 2, a scene motion level of sampling period 2 is determined, e.g., scene motion level 6, where the proportional coefficient corresponding to scene motion level 6 is 0.875, the variable adjustment bitrate of sampling period 3 is 350 (400*0.875) Kbps. In sampling period 3, a scene motion level of sampling period 3 is determined, e.g., scene motion level 6, where the proportional coefficient corresponding to scene motion level 6 is 0.875, the variable adjustment bitrate of sampling period 4 is 350 Kbps, and so on.

To sum up, for each sampling period of the current adjustment interval, the variable adjustment bitrate of the sampling period may be obtained. Obviously, the variable adjustment bitrate corresponding to the current adjustment interval is a variable value, which may dynamically change, i.e., the variable adjustment bitrate may be dynamically adjusted according to the actual motion of the scene, and the variable adjustment bitrates of different sampling periods may be the same or different, e.g., when the actual motion of the scene is relatively complex, the variable adjustment bitrate becomes larger, and when the actual motion of the scene is relatively simple, the variable adjustment bitrate becomes smaller.

In a possible implementation, referring to FIG. 4, the motion of the current scene may be determined within a period of time, the current scene is divided into a plurality of motion levels, and the variable adjustment bitrate corresponding to each motion level is calculated according to the target bitrate. In order to determine the motion of the current scene, the percentage of the image difference may be obtained by comparing the images, and the motion level of the current scene may be determined based on the percentage of the image difference, so as to achieve the division of the plurality of motion levels, and the time for motion detection is about ten seconds.

Step S32: a target QP range corresponding to the current adjustment interval is determined.

In a possible implementation, a QP range may be preconfigured based on experiences, and the QP range may be used as a target QP range, e.g., the QP range may be [a, b], a represents the minimum QP value (minQP), b represents the maximum QP value (maxQP), and the maximum QP value b is greater than the minimum QP value a.

In a possible implementation, a QP range of the previous adjustment interval of the current adjustment interval may be adjusted, and the adjusted QP range is used as the target QP range.

In a possible implementation, in each short-term period, the QP range may also be adjusted, and the adjusted QP range may be used as the target QP range corresponding to the current adjustment interval.

Step S33: an actual bitrate corresponding to an initial QP within the target QP range is determined.

Exemplarily, after the target QP range corresponding to the current adjustment interval is obtained, one QP may be selected from the target QP range as the initial QP, where the initial QP is greater than or equal to the minimum QP value, and the initial QP is less than or equal to the maximum QP value. After the initial QP is obtained, the video data may be encoded based on the initial QP, and an actual bitrate in the encoding process is obtained. When the initial QP is used to encode the video data, if the actual motion of the scene is relatively complex, the actual bitrate in the encoding process is relatively large; otherwise, if the actual motion of the scene is relatively simple, the actual bitrate in the encoding process is relatively small. Obviously, in the encoding process of the video data, the actual bitrate corresponding to the initial QP may be counted, and the initial QP is adjusted based on the actual bitrate.

Step S34: if the actual bitrate corresponding to the QP (i.e., the initial QP) of the current adjustment interval is greater than the variable adjustment bitrate corresponding to the current adjustment interval, the QP of the current adjustment interval may be increased to obtain the target QP of the current adjustment interval. Alternatively, if the actual bitrate corresponding to the QP of the current adjustment interval is less than the variable adjustment bitrate corresponding to the current adjustment interval, the QP of the current adjustment interval may be reduced to obtain the target QP of the current adjustment interval.

For example, if the actual bitrate is greater than the variable adjustment bitrate, the initial QP is increased; if the increased QP is within the target QP range, the increased QP is used as the target QP; and if the increased QP is not within the target QP range (i.e., the increased QP is greater than the maximum QP value of the target QP range), the maximum QP value corresponding to the target QP range is used as the target QP. If the actual encoding bitrate is less than the variable adjustment bitrate, the initial QP is reduced; if the reduced QP is within the target QP range, the reduced QP is used as the target QP; and if the reduced QP is not within the target QP range (i.e., the reduced QP is less than the minimum QP value of the target QP range), the minimum QP value corresponding to the target QP range is used as the target QP.

Exemplarily, in the encoding process of the video data by using the initial QP, the actual bitrate may be compared with the variable adjustment bitrate (since the variable adjustment bitrate dynamically changes, the actual bitrate may be compared with the variable adjustment bitrate at the current moment). If the actual bitrate is greater than the variable adjustment bitrate, the initial QP is increased, and the increased QP is used as the target QP; or if the actual bitrate is less than the variable adjustment bitrate, the initial QP is reduced, and the reduced QP is used as the target QP.

In an adjustment process of the initial QP, if the adjusted QP is greater than the maximum QP value, the maximum QP value is used as the target QP; if the adjusted QP is less than the minimum QP value, the minimum QP value is used as the target QP, i.e., the initial QP needs to be adjusted in the target QP range [minQP, maxQP]; and when the initial QP is adjusted to minQP or maxQP, regardless of the relationship between the actual bitrate and the variable adjustment bitrate, the initial QP is no longer adjusted.

After the target QP is obtained, the video data may be encoded based on the target QP, the actual bitrate in the encoding process is obtained, and then the target QP is adjusted based on the actual bitrate. For example, if the actual bitrate is greater than the variable adjustment bitrate, the target QP is increased; if the increased QP is within the target QP range, the target QP is determined based on the increased QP; and if the increased QP is not within the target QP range, the target QP is determined based on the maximum QP value corresponding to the target QP range. If the actual bitrate is less than the variable adjustment bitrate, the target QP is reduced; and if the reduced QP is within the target QP range, the target QP is determined based on the reduced QP, or if the reduced QP is not within the target QP range, the target QP is determined based on the minimum QP value corresponding to the target QP range.

Following this rule, the target QP may be constantly adjusted, and the video data is encoded based on the adjusted target QP, so as to bring the actual bitrate closer to the variable adjustment bitrate, i.e., the QP is adjusted between minQP and maxQP, thereby bringing the actual bitrate closer to the variable adjustment bitrate corresponding to the motion level of the current scene.

Step S35: the video data is encoded based on the target QP within the current adjustment interval.

In the encoding process of the video data, the target QP may be continuously adjusted based on the actual bitrate in the encoding process and the variable adjustment bitrate corresponding to the current adjustment interval, and the foregoing process is constantly repeated.

When the actual bitrate is higher than the variable adjustment bitrate, the QP is adjusted upward until it is close to the variable adjustment bitrate, and the QP is maximally adjusted to maxQP (i.e., the maximum QP value) and then clamped in place without further adjustment. When the actual bitrate is lower than the variable adjustment bitrate, the QP is adjusted downward until it is close to the variable adjustment bitrate, and the QP is minimally adjusted to minQP (i.e., the minimal QP value) and then clamped in place without further adjustment.

4. Scene change compatibility. For example, assuming that the environment changes cyclically with a long-term period, when the scene changes with respect to the previous long-term period, the encoding in the new long-term period will be affected, and at this time, the scene change is triggered, the new long-term period may be used as the first long-term period, and the foregoing encoding process is constantly repeated. For example, after 10 number of long-term periods, the scene change is triggered, the eleventh long-term period is taken as the first long-term period, the twelfth long-term period is used as the second long-term period, and so on, and the foregoing encoding process is constantly repeated.

In a possible implementation, the steps described below may be used to determine whether the scene changes.

Step S41: in the current adjustment interval, after encoding the video data based on the target QP, the second QP corresponding to the current adjustment interval is determined based on the size and the actual QP of each encoded image in the current adjustment interval and the total code length of the current adjustment interval, where the second QP represents an average QP of the current adjustment interval when a frame size is used as a weight. A manner of determining the second QP is similar to that of the first QP, referring to step S11, which is not repeated herein again.

Step S42: a normalization adjustment coefficient corresponding to the current adjustment interval is determined based on the second QP, the configured reference QP value, and the bitrate change value caused per QP step.

Exemplarily, step S42 may refer to step S12, which is not repeated herein again.

Step S43: a normalization operation is performed on the total code length of the current adjustment interval based on the normalization adjustment coefficient corresponding to the current adjustment interval, to obtain a normalized length of the current adjustment interval.

In a possible implementation, the normalized length of the current adjustment interval may be determined by using the formula (9) below. Certainly, formula (9) is merely an example, which is not limited herein.

$$X = A * (1 + 0.1225)^{(QPa-33)} \qquad \text{Formula (9)}$$

In formula (9), $(1 + 0.1225)^{(QPa-33)}$ represents the normalization adjustment coefficient corresponding to the current adjustment interval, $QPa$ represents the second QP corresponding to the current adjustment interval, 33 represents the configured reference QP value, 1.1225 represents the bitrate change value caused per QP step, A represents the total code length of the current adjustment interval, and X represents the normalized length of the current adjustment interval.

Step S44: a reference adjustment interval is selected from M number of long-term periods before the current long-term period respectively, to obtain M number of reference adjustment intervals corresponding to the current adjustment interval, where M may be a positive integer.

For example, taking M being 3 as an example, a reference adjustment interval corresponding to the current adjustment interval is selected from the first long-term period before the current long-term period, a reference adjustment interval corresponding to the current adjustment interval is selected from the second long-term period before the current long-term period, and a reference adjustment interval corresponding to the current adjustment interval is selected from the third long-term period before the current long-term period. The selection manner may refer to step S14, which is not repeated herein again.

Step S45: an average length of normalized lengths of the M number of reference adjustment intervals is determined.

For example, for each reference adjustment interval, a normalized length of the reference adjustment interval may be determined, and the determination manner may refer to step S41 - step S43, which is not repeated herein again. After the normalized length of each reference adjustment interval is obtained, the average length of these normalized lengths may be determined, for example, the average length of the normalized lengths of the M number of reference adjustment intervals may be determined by using the following formula.

$$Y = \frac{L*(1+0.1225)^{(QPl-33)}+Q*(1+0.1225)^{(QPq-33)}+N*(1+0.1225)^{(QPn-33)}}{3};$$

$L*(1+0.1225)^{(QPl-33)}$, $Q*(1+0.1225)^{(QPq-33)}$, and $N*(1+0.1225)^{(QPn-33)}$ represent normalized lengths of the M number of reference adjustment intervals respectively, and Y represents the average length of the normalized lengths.

Step S46: if a change percentage of the normalized length (e.g., the normalized length X) of the current adjustment interval to the average length (e.g., the average length Y) is greater than the first threshold, the scene change score value is increased. The change percentage may be an increase percentage of X relative to Y, or the change percentage may be a decrease percentage of X relative to Y.

In a possible implementation, the first threshold may be a value, and when the change percentage is greater than the first threshold, the scene change score value is increased by 1, or when the change percentage is less than or equal to the first threshold, the scene change score value remains unchanged. Alternatively, the first threshold may be a plurality of values, and with the control of the plurality of values, the larger the change percentage is, the larger the scene change score value is, for example, the plurality of values may be two values or three values; subsequently, using value 1 and value 2 as an example, the value 1 is less than the value 2; when the change percentage is less than or equal to the value 1, the scene change score value remains unchanged; when the change percentage is greater than the value 1 and less than or equal to the value 2, the scene change score value is increased by 1; or when the change percentage is greater than the value 2, the scene change score value is increased by 2.

Exemplarily, when the initial value of the scene change score value is 0, starting from the fourth long-term period (i.e., starting from M+1 long-term periods), for each adjustment interval, when the adjustment interval is used as the current adjustment interval, the scene change score value may be updated by using step S41 - step S46. The scene change score value may remain unchanged, and the scene change score value may also be increased, e.g., the scene change score value is increased by 1.

Step S47: after the scene change score value is increased each time, if the scene change score value is greater than the second threshold, the scene change is triggered, and the next long-term period of the current long-term period is updated to be the first long-term period, i.e., the foregoing processes are repeated from the first long-term period. If the scene change score value is less than or equal to the second threshold, the next long-term period of the current long-term period will not be updated to the first long-term period. The scene change score value is used to reflect whether a scene changes, and the scene change score value reflects that the scene changes when the scene change score value is greater than the second threshold, or that the scene does not change when the scene change score value is less than or equal to than the second threshold.

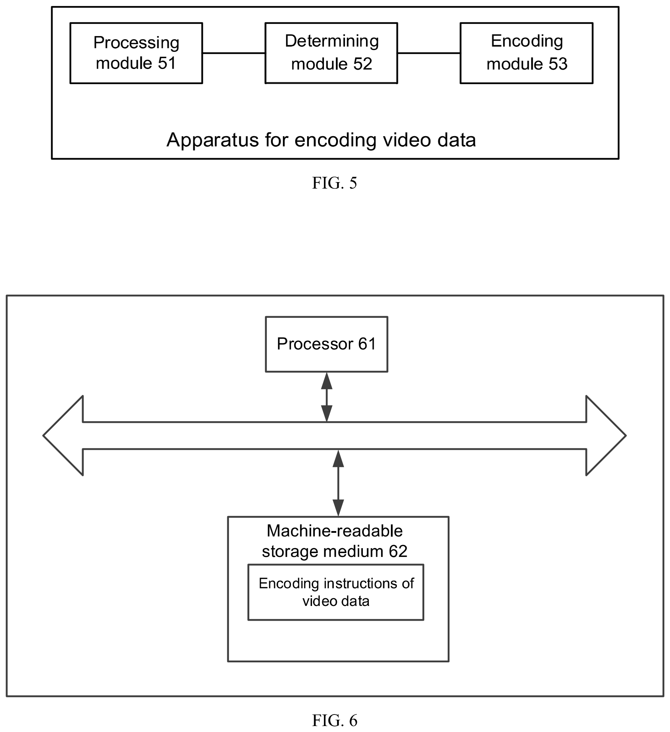

Based on the same application concept as the foregoing method, the embodiments of the present disclosure provides an apparatus for encoding video data, referring to FIG. 5, which is a schematic structure diagram of the apparatus, an encoding process of the video data is divided into a plurality of long-term periods, each of the long-term periods is divided into K number of adjustment intervals, each of the long-term period indicates a period in which a bitrate is expected to be fixed, each of the adjustment intervals indicates a period in which a bitrate changes along with an acquisition scene change of the video data, and K is greater than 1, the apparatus includes:

a processing module 51, configured to: in the encoding process of the video data, for a current adjustment interval in a current long-term period, if the current long-term period is not a first long-term period of the encoding process of the video data, select a reference adjustment interval from a previous long-term period of the current long-term period, where a position of the reference adjustment interval in the previous long-term period is the same as a position of the current adjustment interval in the current long-term period, and a position of an adjustment interval in a long-term period represents which number of adjustment interval in the long-term period is the adjustment interval; and determine a target bitrate corresponding to the current adjustment interval based on an actual bitrate corresponding to the reference adjustment interval, where the actual bitrate represents a bitrate of an encoded bitstream when the video data is encoded in the reference adjustment interval, and the target bitrate represents an expected average bitrate in the current adjustment interval; a determining module 52, configured to: determine a target Quantization Parameter (QP) of the current adjustment interval based on the target bitrate; and an encoding module 53, configured to: encode the video data based on the target QP within the current adjustment interval.

Exemplarily, the processing module 51, when determining a target bitrate corresponding to the current adjustment interval based on an actual bitrate corresponding to the reference adjustment interval, is specifically configured to: perform a normalization operation on the actual bitrate corresponding to each adjustment interval in the previous long-term period, to obtain a normalized bitrate corresponding to each adjustment interval, where the normalization operation is used to adjust actual bitrates corresponding to all the adjustment intervals in the previous long-term period under a same QP reference, and the QP reference is a configured reference QP value; determine a proportional coefficient based on the normalized bitrate corresponding to the reference adjustment interval and a sum of the normalized bitrates corresponding to all the adjustment intervals in the previous long-term period, where the proportional coefficient represents a proportional value between the normalized bitrate corresponding to the reference adjustment interval and the sum of the normalized bitrates corresponding to all the adjustment intervals; and determine the target bitrate corresponding to the current adjustment interval based on a long-term-period bitrate, a long-term-period duration, and the proportional coefficient, where the long-term-period bitrate represents an expected average bitrate in the long-term period, the long-term-period bitrate corresponding to each of the long-term periods is a fixed value, and the long-term-period duration represents a total duration of the long-term period.

Exemplarily, the processing module 51, when performing a normalization operation on an actual bitrate corresponding to each adjustment interval in the previous long-term period, to obtain a normalized bitrate corresponding to each adjustment interval, is specifically configured to: for each adjustment interval in the previous long-term period, determine a first QP corresponding to the adjustment interval based on a size and an actual QP of each encoded image in the adjustment interval and a total code length of the adjustment interval, where the first QP represents an average QP of the adjustment interval with a frame size as a weight, and the total code length represents a sum of sizes of all encoded images in the adjustment interval; determine a normalization adjustment coefficient corresponding to the adjustment interval based on the first QP, the configured reference QP value, and a bitrate change value caused per QP step, where the bitrate change value caused per QP step represents a bitrate change value caused by each unit of change in the QP; and perform the normalization operation on the actual bitrate corresponding to the adjustment interval based on the normalization adjustment coefficient corresponding to the adjustment interval, to obtain the normalized bitrate corresponding to the adjustment interval.

Exemplarily, the processing module 51, when determining a first QP corresponding to the adjustment interval based on a size and an actual QP of each encoded image in the adjustment interval and a total code length of the adjustment interval, is specifically configured to: determine the first QP corresponding to the adjustment interval by using the following formula:

$$\mathrm{A/QP} = \frac{QP1 * FRM1 + \cdots + QPm * FRMm}{X}$$

where A/QP represents the first QP corresponding to the adjustment interval, QP1 represents the actual QP of a first frame of encoded image in the adjustment interval, FRM1 represents the size of the first frame of encoded image in the adjustment interval, QPm represents the actual QP of a m-th frame of encoded image in the adjustment interval, FRMm represents the size of the m-th frame of encoded image in the adjustment interval, X represents the total code length of the adjustment interval, and m is a positive integer greater than 1.

Exemplarily, the processing module 51, when determining the normalization adjustment coefficient corresponding to the adjustment interval based on the first QP, the configured reference QP value, and the bitrate change value caused per QP step, is specifically configured to: determine the normalization adjustment coefficient corresponding to the adjustment interval by using the following formula:

$$\mathrm{R} = p^{(A/QP - s)}$$

where R represents the normalization adjustment coefficient corresponding to the adjustment interval, p represents the bitrate change value caused per QP step, A/QP represents the first QP corresponding to the adjustment interval, and s represents the configured reference QP value.

Exemplarily, the processing module 51, when performing the normalization operation on the actual bitrate corresponding to the adjustment interval based on the normalization adjustment coefficient corresponding to the adjustment interval, to obtain the normalized bitrate corresponding to the adjustment interval, is specifically configured to: determine the normalization bitrate corresponding to the adjustment interval by using a following formula:

$$\text{bpsA} = bps1 * \text{R}$$

where R represents the normalization adjustment coefficient corresponding to the adjustment interval, $bps1$ represents the actual bitrate corresponding to the adjustment interval, and bpsA represents the normalized bitrate corresponding to the adjustment interval.

Exemplarily, the processing module 51, when determining a proportional coefficient based on the normalized bitrate corresponding to the actual bitrate corresponding to the reference adjustment interval and a sum of the normalized bitrates corresponding to all the adjustment intervals in the previous long-term period, is specifically configured to: determine the proportional coefficient corresponding to the adjustment interval by using a following formula:

$$\text{C} = \frac{bpsA}{bpsA + bpsB + \cdots + bpsZ}$$

where C represents the proportional coefficient corresponding to the adjustment interval, $bpsA$ represents the normalized bitrate corresponding to the actual bitrate corresponding to the reference adjustment interval, and $bpsA + bpsB + \cdots + bpsZ$ represents the sum of the normalized bitrates corresponding to all the adjustment intervals in the previous long-term period.

Exemplarily, the processing module 51, when determining the target bitrate corresponding to the current adjustment interval based on a long-term-period bitrate, a long-term-period duration, and the proportional coefficient, is specifically configured to: determine the target bitrate corresponding to the current adjustment interval by using a following formula:

$$\text{bpsa} = Y * T * \text{C};$$

where $Y$ represents the long-term-period bitrate, which is a pre-configured value or a value obtained by using an algorithm, T represents the long-term-period duration, C represents the proportional coefficient, and bpsa represents the target bitrate corresponding to the current adjustment interval.

Exemplarily, the processing module 51, when determining a target bitrate corresponding to the current adjustment interval based on an actual bitrate corresponding to the reference adjustment interval, is specifically configured to: determine an initial bitrate corresponding to the current adjustment interval based on the actual bitrate corresponding to the reference adjustment interval; if the current long-term period is the second long-term period of the encoding process of the video data, determine the initial bitrate as the target bitrate corresponding to the current adjustment interval; or if the current long-term period is not the second long-term period of the encoding process of the video data, determine a quotient of the target bitrate corresponding to the reference adjustment interval and the actual bitrate corresponding to the reference adjustment interval as a bitrate coefficient, and determine a product of the initial bitrate and the bitrate coefficient as the target bitrate corresponding to the current adjustment interval.

Exemplarily, the processing module 51, before determining the target QP of the current adjustment interval based on the target bitrate, is further configured to: if the current long-term period is the first long-term period of the encoding process of the video data, determine the target bitrate corresponding to the current adjustment interval based on a configured long-term-period bitrate; if the current adjustment interval is a first adjustment interval in the current long-term period, determine the long-term-period bitrate as the target bitrate corresponding to the current adjustment interval; or if the current adjustment interval is not the first adjustment interval in the current long-term period, determine the target bitrate corresponding to the current adjustment interval based on the long-term-period bitrate, the long-term-period duration, a total quantity of actual code bits before the current adjustment interval, and a remaining duration of the current long-term period, where the total quantity of actual code bits represents total quantity of bits of the video data encoded before the current adjustment interval, and the remaining duration of the current long-term period represents a duration from the current adjustment interval to a last adjustment interval of the current long-term period.

Exemplarily, the processing module 51, when determining the target bitrate corresponding to the current adjustment interval based on the long-term-period bitrate, a long-term-period duration, a total quantity of actual code bits before the current adjustment interval, and a remaining duration of the current long-term period, is specifically configured to: determine the target bitrate corresponding to the current adjustment interval based on the following formula:

Target bitrate = [long-term-period bitrate * long-term-period duration - total quantity of actual code bits] / remaining duration of the long-term period.

Exemplarily, the processing module 51 is further configured to: select a reference adjustment interval from M number of long-term periods before the current long-term period respectively, M being a positive integer; determine an average length of normalized lengths of M number of selected reference adjustment intervals; if a change percentage of the normalized length of the current adjustment interval to the average length is greater than a first threshold, increase a scene change score value; and if the scene change score value is greater than a second threshold, update a next long-term period of the current long-term period to be a first long-term period, where the scene change score value is used to reflect whether a scene changes, and the scene change score value reflects that the scene changes when the scene change score value is greater than the second threshold; where the processing module, when determining the normalized length of the reference adjustment interval or the current adjustment interval, is specifically configured to: determine a second QP corresponding to the adjustment interval based on a size and an actual QP of each encoded image in the adjustment interval and a total code length of the adjustment interval, where the second QP represents an average QP of the adjustment interval with a frame size as a weight; determine a normalization adjustment coefficient corresponding to the adjustment interval based on the second QP, a configured reference QP value, and a bitrate change value caused per QP step; and perform a normalization operation on the total code length of the adjustment interval based on the normalization adjustment coefficient, to obtain the normalized length of the adjustment interval.

Exemplarily, the determining module 52, when determining a target QP of the current adjustment interval based on the target bitrate, is further configured to: determine a variable adjustment bitrate corresponding to the current adjustment interval based on the target bitrate corresponding to the current adjustment interval and a scene motion level of the current adjustment interval, where the variable adjustment bitrate is less than or equal to the target bitrate, the scene motion level represents a motion degree of a moving object in a scene, and when the scene motion level is larger, the variable adjustment bitrate is larger, and the variable adjustment bitrate is a bitrate dynamically adjusted according to the motion degree of the moving object in the scene; if an actual bitrate corresponding to a QP of the current adjustment interval is greater than the variable adjustment bitrate, increase the QP of the current adjustment interval to obtain the target QP of the current adjustment interval; and if the actual bitrate corresponding to the QP of the current adjustment interval is less than the variable adjustment bitrate, reduce the QP of the current adjustment interval to obtain the target QP of the current adjustment interval.

Exemplarily, the determining module 52, when determining a variable adjustment bitrate corresponding to the current adjustment interval based on the target bitrate corresponding to the current adjustment interval and a scene motion level of the current adjustment interval, is specifically configured to: determine a configured proportional coefficient corresponding to the scene motion level, where the proportional coefficient is greater than 0 and less than or equal to 1, and the scene motion level is larger, the proportional coefficient is larger, and the scene motion level has a one-to-one correspondence with the proportional coefficient; and determine a product of the proportional coefficient and the target bitrate as the variable adjustment bitrate.

Based on the same application concept as the foregoing method, embodiments of the present disclosure provide an electronic device, referring to FIG. 6, the electronic device includes: a processor 61 and a machine-readable storage medium 62, where the machine-readable storage medium 62 stores machine-executable instructions executable by the processor 61; the processor 61 is configured to execute the machine-executable instructions to implement the method for encoding video data disclosed in the foregoing examples of the present disclosure.

Based on a same application concept as the foregoing method, the embodiments of the present disclosure further provide a machine-readable storage medium, where the machine-readable storage medium stores several computer instructions, and when the computer instructions are executed by a processor, the method for encoding video data disclosed in the foregoing examples of the present disclosure can be implemented.

The foregoing machine-readable storage medium may be any electronic, magnetic, optical, or other physical storage apparatus, and may include or store information, e.g., executable instructions, data, etc. For example, the machine-readable storage medium may be a Random Access Memory (RAM), a volatile memory, a non-volatile memory, a flash memory, a storage drive (such as a hard disk drive), a solid state disk, any type of storage disk (e.g., an optical disk, a dvd, etc.), or a similar storage medium, or a combination thereof.

The system, apparatus, module, or unit illustrated in the foregoing embodiments may be specifically implemented by a computer entity, or implemented by a product having a certain function. A typical implementation device is a computer, and a specific form of the computer may be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For ease of description, the foregoing apparatus is described separately by dividing a function into various units. Certainly, when the present disclosure is implemented, functions of the units may be implemented in one or more pieces of software and/or hardware.

A person skilled in the art should understand that the embodiments of the present disclosure may be provided as a method, a system, or a computer program product. Therefore, the present disclosure may use a form of hardware only embodiments, software only embodiments, or embodiments with a combination of software and hardware. Moreover, the embodiments of the present disclosure may use a form of a computer program product implemented on one or more computer-usable storage media (including but not limited to a disk memory, a CD- ROM, an optical memory, and the like) that include computer-usable program code.

This application is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer program instructions. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing functions specified in one or more procedures in the flowcharts and/or one or more blocks in the block diagrams.

Moreover, these computer program instructions may also be stored in a computer-readable memory that can guide a computer or other programmable data processing devices to work in a specific manner, so that the instructions stored in the computer-readable memory generate a product including an instruction apparatus, and the instruction apparatus implements functions specified in one or more processes in the flowcharts and/or one or more blocks in the block diagrams. These computer program instructions may also be loaded onto a computer or other programmable data processing device to cause a series of operational steps to be performed on the computer or other programmable device to produce computer-implemented processing, such that the instructions executed on the computer or other programmable device provide steps for implementing the functions specified in one or more processes of the flowcharts and/or one or more blocks of the block diagrams.

The foregoing descriptions are merely embodiments of the present disclosure and are not intended to limit the present disclosure. For those skilled in the art, the present disclosure may have various modifications and variations. Any modification, equivalent replacement, or improvement made without departing from the spirit and principle of the present disclosure shall fall within the scope of the claims of the present disclosure.

## Claims

1. A method for encoding video data, wherein an encoding process of the video data is divided into a plurality of long-term periods, each of the long-term periods is divided into K number of adjustment intervals, each of the long-term periods indicates a period in which a bitrate is expected to be fixed, each of the adjustment intervals indicates a period in which a bitrate changes along with an acquisition scene change of the video data, and the method comprises:

   in the encoding process of the video data, for a current adjustment interval in a current long-term period, in response to the current long-term period being not a first long-term period of the encoding process of the video data, selecting a reference adjustment interval from a previous long-term period of the current long-term period, wherein a position of the reference adjustment interval in the previous long-term period is the same as a position of the current adjustment interval in the current long-term period, and a position of an adjustment interval in a long-term period represents which number of adjustment interval in the long-term period is the adjustment interval;
   determining a target bitrate corresponding to the current adjustment interval based on an actual bitrate corresponding to the reference adjustment interval, wherein the actual bitrate represents a bitrate of an encoded bitstream when the video data is encoded in the reference adjustment interval, and the target bitrate represents an expected average bitrate in the current adjustment interval;
   determining a target Quantization Parameter, QP, of the current adjustment interval based on the target bitrate; and
   encoding the video data based on the target QP within the current adjustment interval.

2. The method according to claim 1, wherein the determining a target bitrate corresponding to the current adjustment interval based on an actual bitrate corresponding to the reference adjustment interval comprises:

   performing a normalization operation on the actual bitrate corresponding to each adjustment interval in the previous long-term period, to obtain a normalized bitrate corresponding to each adjustment interval, wherein the normalization operation is used to adjust the actual bitrates corresponding to all the adjustment intervals in the previous long-term period under a same QP reference, and the QP reference is a configured reference QP value;
   determining a proportional coefficient based on the normalized bitrate corresponding to the reference adjustment interval and a sum of the normalized bitrates corresponding to all the adjustment intervals in the previous long-term period, wherein the proportional coefficient represents a proportional value between the normalized bitrate corresponding to the reference adjustment interval and the sum of the normalized bitrates corresponding to all the adjustment intervals; and

determining the target bitrate corresponding to the current adjustment interval based on a long-term-period bitrate, a long-term-period duration, and the proportional coefficient, wherein the long-term-period bitrate represents an expected average bitrate in the long-term period, the long-term-period bitrate corresponding to each of the long-term periods is a fixed value, and the long-term-period duration represents a total duration of the long-term period.

3. The method according to claim 2, wherein the performing a normalization operation on the actual bitrate corresponding to each adjustment interval in the previous long-term period, to obtain a normalized bitrate corresponding to each adjustment interval comprises: for each adjustment interval in the previous long-term period,

determining a first QP corresponding to the adjustment interval based on a size and an actual QP of each encoded image in the adjustment interval and a total code length of the adjustment interval, wherein the first QP represents an average QP of the adjustment interval with a frame size as a weight, and the total code length represents a sum of sizes of all encoded images in the adjustment interval;

determining a normalization adjustment coefficient corresponding to the adjustment interval based on the first QP, the configured reference QP value, and a bitrate change value caused per QP step, wherein the bitrate change value caused per QP step represents a bitrate change value caused by each unit of change in the QP; and

performing the normalization operation on the actual bitrate corresponding to the adjustment interval based on the normalization adjustment coefficient corresponding to the adjustment interval, to obtain the normalized bitrate corresponding to the adjustment interval.

4. The method according to claim 3, wherein
the determining a first QP corresponding to the adjustment interval based on a size and an actual QP of each encoded image in the adjustment interval and a total code length of the adjustment interval comprises:
determining the first QP corresponding to the adjustment interval by using a following formula:

$$\text{A/QP} = \frac{QP1 * FRM1 + \cdots + QPm * FRMm}{X}$$

wherein A/QP represents the first QP corresponding to the adjustment interval, QP1 represents the actual QP of a first frame of encoded image in the adjustment interval, FRM1 represents the size of the first frame of encoded image in the adjustment interval, QPm represents the actual QP of a m-th frame of encoded image in the adjustment interval, FRMm represents the size of the m-th frame of encoded image in the adjustment interval, X represents the total code length of the adjustment interval, and m is a positive integer greater than 1.

5. The method according to claim 3, wherein
the determining a normalization adjustment coefficient corresponding to the adjustment interval based on the first QP, the configured reference QP value, and a bitrate change value caused per QP step comprises:
determining the normalization adjustment coefficient corresponding to the adjustment interval by using a following formula:

$$\text{R} = p^{(A/QP-s)}$$

wherein R represents the normalization adjustment coefficient corresponding to the adjustment interval, p represents the bitrate change value caused per QP step, A/QP represents the first QP corresponding to the adjustment interval, and s represents the configured reference QP value.

6. The method according to claim 3, wherein
the performing the normalization operation on the actual bitrate corresponding to the adjustment interval based on the normalization adjustment coefficient corresponding to the adjustment interval, to obtain the normalized bitrate corresponding to the adjustment interval comprises:
determining the normalized bitrate corresponding to the adjustment interval by using a following formula:

$$\mathrm{bpsA} = bps1 * \mathrm{R}$$

wherein R represents the normalization adjustment coefficient corresponding to the adjustment interval, *bps*1 represents the actual bitrate corresponding to the adjustment interval, and bpsA represents the normalized bitrate corresponding to the adjustment interval.

7. The method according to claim 2, wherein
the determining a proportional coefficient based on the normalized bitrate corresponding to the reference adjustment interval and a sum of the normalized bitrates corresponding to all the adjustment intervals in the previous long-term period comprises:
determining the proportional coefficient corresponding to the adjustment interval by using a following formula:

$$\mathrm{C} = \frac{bpsA}{bpsA + bpsB + \cdots + bpsZ}$$

wherein C represents the proportional coefficient corresponding to the adjustment interval, *bpsA* represents the normalized bitrate corresponding to the reference adjustment interval, and *bpsA* + *bpsB* + ⋯ + *bpsZ* represents the sum of the normalized bitrates corresponding to all the adjustment intervals in the previous long-term period.

8. The method according to claim 2, wherein the determining the target bitrate corresponding to the current adjustment interval based on a long-term-period bitrate, a long-term-period duration, and the proportional coefficient comprises:
determining the target bitrate corresponding to the current adjustment interval by using a following formula:

$$\mathrm{bpsa} = Y * T * \mathrm{C}$$

wherein *Y* represents the long-term-period bitrate, which is a pre-configured value or a value obtained by using an algorithm, T represents the long-term-period duration, C represents the proportional coefficient, and bpsa represents the target bitrate corresponding to the current adjustment interval.

9. The method according to any one of claims 1-8, wherein the determining a target bitrate corresponding to the current adjustment interval based on an actual bitrate corresponding to the reference adjustment interval comprises:

determining an initial bitrate corresponding to the current adjustment interval based on the actual bitrate corresponding to the reference adjustment interval;
in response to the current long-term period being a second long-term period of the encoding process of the video data, determining the initial bitrate as the target bitrate corresponding to the current adjustment interval; or
in response to the current long-term period being not the second long-term period of the encoding process of the video data, determining a quotient of the target bitrate corresponding to the reference adjustment interval and the actual bitrate corresponding to the reference adjustment interval as a bitrate coefficient, and determining a product of the initial bitrate and the bitrate coefficient as the target bitrate corresponding to the current adjustment interval.

10. The method according to any one of claims 1-8, wherein before determining the target QP of the current adjustment interval based on the target bitrate, the method further comprises:
in response to the current long-term period being the first long-term period of the encoding process of the video data, determining the target bitrate corresponding to the current adjustment interval based on a configured long-term-period bitrate;

wherein in response to the current adjustment interval being a first adjustment interval in the current long-term period, determining the long-term-period bitrate as the target bitrate corresponding to the current adjustment interval; or
in response to the current adjustment interval being not the first adjustment interval in the current long-term period, determining the target bitrate corresponding to the current adjustment interval based on the long-term-period bitrate, the long-term-period duration, a total quantity of actual code bits before the current adjustment interval, and a remaining duration of the current long-term period, wherein the total quantity of actual code bits represents total quantity of bits of the video data encoded before the current adjustment interval, and the remaining duration of the current long-term period represents a duration from the current adjustment interval to a last adjustment interval of the current long-term period.

11. The method according to claim 10, wherein the determining the target bitrate corresponding to the current adjustment interval based on the long-term-period bitrate, a long-term-period duration, a total quantity of actual code bits before the current adjustment interval, and a remaining duration of the current long-term period comprises:
determining the target bitrate corresponding to the current adjustment interval based on a following formula:

Target bitrate = [long-term-period bitrate * long-term-period duration - total quantity of actual code bits] / remaining duration of the long-term period.

12. The method according to any one of claims 1-8, wherein after encoding the video data based on the target QP within the current adjustment interval, the method further comprises:

selecting a reference adjustment interval from M number of long-term periods before the current long-term period respectively, M being a positive integer;
determining an average length of normalized lengths of M number of selected reference adjustment intervals;
in response to a change percentage of the normalized length of the current adjustment interval to the average length being greater than a first threshold, increasing a scene change score value; and
in response to the scene change score value being greater than a second threshold, updating a next long-term period of the current long-term period to be a first long-term period, wherein the scene change score value is used to reflect whether a scene changes, and the scene change score value reflects that the scene changes when the scene change score value is greater than the second threshold;
wherein a manner of determining the normalized length of the reference adjustment interval or the current adjustment interval comprises:

determining a second QP corresponding to the adjustment interval based on a size and an actual QP of each encoded image in the adjustment interval and a total code length of the adjustment interval, wherein the second QP represents an average QP of the adjustment interval with a frame size as a weight;
determining a normalization adjustment coefficient corresponding to the adjustment interval based on the second QP, a configured reference QP value, and a bitrate change value caused per QP step; and
performing a normalization operation on the total code length of the adjustment interval based on the normalization adjustment coefficient, to obtain the normalized length of the adjustment interval.

13. The method according to any one of claims 1-8, wherein
the determining a target QP of the current adjustment interval based on the target bitrate comprises:

determining a variable adjustment bitrate corresponding to the current adjustment interval based on the target bitrate corresponding to the current adjustment interval and a scene motion level of the current adjustment interval, wherein the variable adjustment bitrate is less than or equal to the target bitrate, the scene motion level represents a motion degree of a moving object in a scene, and when the scene motion level is larger, the variable adjustment bitrate is larger, and the variable adjustment bitrate is a bitrate dynamically adjusted according to the motion degree of the moving object in the scene;
in response to an actual bitrate corresponding to a QP of the current adjustment interval being greater than the variable adjustment bitrate, increasing the QP of the current adjustment interval to obtain the target QP of the current adjustment interval; and
in response to the actual bitrate corresponding to the QP of the current adjustment interval being less than the variable adjustment bitrate, reducing the QP of the current adjustment interval to obtain the target QP of the current adjustment interval.

14. The method according to claim 13, wherein
the determining a variable adjustment bitrate corresponding to the current adjustment interval based on the target bitrate corresponding to the current adjustment interval and a scene motion level of the current adjustment interval comprises:

determining a configured proportional coefficient corresponding to the scene motion level, wherein the proportional coefficient is greater than 0 and less than or equal to 1, and the scene motion level is larger, the proportional coefficient is larger, and the scene motion level has a one-to-one correspondence with the proportional coefficient; and

determining a product of the proportional coefficient and the target bitrate as the variable adjustment bitrate.

15. An apparatus for encoding video data, wherein an encoding process of the video data is divided into a plurality of long-term periods, each of the long-term periods is divided into K number of adjustment intervals, each of the long-term periods indicates a period in which a bitrate is expected to be fixed, each of the adjustment intervals indicates a period in which a bitrate changes along with an acquisition scene change of the video data, and the apparatus comprises:

a processing module, configured to: in the encoding process of the video data, for a current adjustment interval in a current long-term period, in response to the current long-term period being not a first long-term period of the encoding process of the video data, select a reference adjustment interval from a previous long-term period of the current long-term period, wherein a position of the reference adjustment interval in the previous long-term period is the same as a position of the current adjustment interval in the current long-term period, and a position of an adjustment interval in a long-term period represents which number of adjustment interval in the long-term period is the adjustment interval; and determine a target bitrate corresponding to the current adjustment interval based on an actual bitrate corresponding to the reference adjustment interval, wherein the actual bitrate represents a bitrate of an encoded bitstream when the video data is encoded in the reference adjustment interval, and the target bitrate represents an expected average bitrate in the current adjustment interval;
a determining module, configured to: determine a target Quantization Parameter, QP, of the current adjustment interval based on the target bitrate; and
an encoding module, configured to: encode the video data based on the target QP within the current adjustment interval.

16. The apparatus according to claim 15, wherein the processing module, when determining a target bitrate corresponding to the current adjustment interval based on an actual bitrate corresponding to the reference adjustment interval, is configured to:

perform a normalization operation on the actual bitrate corresponding to each adjustment interval in the previous long-term period, to obtain a normalized bitrate corresponding to each adjustment interval, wherein the normalization operation is used to adjust the actual bitrates corresponding to all the adjustment intervals in the previous long-term period under a same QP reference, and the QP reference is a configured reference QP value;
determine a proportional coefficient based on the normalized bitrate corresponding to the reference adjustment interval and a sum of the normalized bitrates corresponding to all the adjustment intervals in the previous long-term period, wherein the proportional coefficient represents a proportional value between the normalized bitrate corresponding to the reference adjustment interval and the sum of the normalized bitrates corresponding to all the adjustment intervals; and
determine the target bitrate corresponding to the current adjustment interval based on a long-term-period bitrate, a long-term-period duration, and the proportional coefficient, wherein the long-term-period bitrate represents an expected average bitrate in the long-term period, the long-term-period bitrate corresponding to each of the long-term periods is a fixed value, and the long-term-period duration represents a total duration of the long-term period.

17. The apparatus according to claim 16, wherein the processing module, when performing a normalization operation on the actual bitrate corresponding to each adjustment interval in the previous long-term period, to obtain a normalized bitrate corresponding to each adjustment interval, is configured to: for each adjustment interval in the previous long-term period,

determine a first QP corresponding to the adjustment interval based on a size and an actual QP of each encoded image in the adjustment interval and a total code length of the adjustment interval, wherein the first QP represents an average QP of the adjustment interval with a frame size as a weight, and the total code length represents a sum of sizes of all encoded images in the adjustment interval;
determine a normalization adjustment coefficient corresponding to the adjustment interval based on the first QP, the configured reference QP value, and a bitrate change value caused per QP step, wherein the bitrate change value caused per QP step represents a bitrate change value caused by each unit of change in the QP; and
perform the normalization operation on the actual bitrate corresponding to the adjustment interval based on the normalization adjustment coefficient corresponding to the adjustment interval, to obtain the normalized bitrate corresponding to the adjustment interval.

18. The apparatus according to claim 17, wherein the processing module, when determining a first QP corresponding to the adjustment interval based on a size and an actual QP of each encoded image in the adjustment interval and a total code length of the adjustment interval, is configured to:
determine the first QP corresponding to the adjustment interval by using a following formula:

$$A/QP = \frac{QP1 * FRM1 + \cdots + QPm * FRMm}{X}$$

wherein A/QP represents the first QP corresponding to the adjustment interval, QP1 represents the actual QP of a first frame of encoded image in the adjustment interval, FRM1 represents the size of the first frame of encoded image in the adjustment interval, QPm represents the actual QP of a m-th frame of encoded image in the adjustment interval, FRMm represents the size of the m-th frame of encoded image in the adjustment interval, X represents the total code length of the adjustment interval, and m is a positive integer greater than 1.

19. The apparatus according to claim 17, wherein the processing module, when determining the normalization adjustment coefficient corresponding to the adjustment interval based on the first QP, the configured reference QP value, and the bitrate change value caused per QP step, is configured to:
determine the normalization adjustment coefficient corresponding to the adjustment interval by using a following formula:

$$R = p^{(A/QP-s)}$$

wherein R represents the normalization adjustment coefficient corresponding to the adjustment interval, p represents the bitrate change value caused per QP step, A/QP represents the first QP corresponding to the adjustment interval, and s represents the configured reference QP value.

20. The apparatus according to claim 17, wherein the processing module, when performing the normalization operation on the actual bitrate corresponding to the adjustment interval based on the normalization adjustment coefficient corresponding to the adjustment interval, to obtain the normalized bitrate corresponding to the adjustment interval, is configured to:
determine the normalized bitrate corresponding to the adjustment interval by using a following formula:

$$bpsA = bps1 * R$$

wherein R represents the normalization adjustment coefficient corresponding to the adjustment interval, *bps*1 represents the actual bitrate corresponding to the adjustment interval, and bpsA represents the normalized bitrate corresponding to the adjustment interval.

21. The apparatus according to claim 16, wherein the processing module, when determining a proportional coefficient based on the normalized bitrate corresponding to the reference adjustment interval and a sum of the normalized bitrates corresponding to all the adjustment intervals in the previous long-term period, is configured to:
determine the proportional coefficient corresponding to the adjustment interval by using a following formula:

$$C = \frac{bpsA}{bpsA + bpsB + \cdots + bpsZ}$$

wherein C represents the proportional coefficient corresponding to the adjustment interval, *bpsA* represents the normalized bitrate corresponding to the reference adjustment interval, and *bpsA* + *bpsB* + ⋯ + *bpsZ* represents the sum of the normalized bitrates corresponding to all the adjustment intervals in the previous long-term period.

22. The apparatus according to claim 16, wherein the processing module, when determining the target bitrate corresponding to the current adjustment interval based on a long-term-period bitrate, a long-term-period duration, and the proportional coefficient, is configured to:

determine the target bitrate corresponding to the current adjustment interval by using a following formula:

$$\mathrm{bpsa} = Y * T * C$$

wherein Y represents the long-term-period bitrate, which is a pre-configured value or a value obtained by using an algorithm, T represents the long-term-period duration, C represents the proportional coefficient, and bpsa represents the target bitrate corresponding to the current adjustment interval.

23. The apparatus according to claims 15-22, wherein the processing module, when determining a target bitrate corresponding to the current adjustment interval based on an actual bitrate corresponding to the reference adjustment interval, is configured to:

   determine an initial bitrate corresponding to the current adjustment interval based on the actual bitrate corresponding to the reference adjustment interval;
   in response to the current long-term period being a second long-term period of the encoding process of the video data, determine the initial bitrate as the target bitrate corresponding to the current adjustment interval; or
   in response to the current long-term period being not the second long-term period of the encoding process of the video data, determine a quotient of the target bitrate corresponding to the reference adjustment interval and the actual bitrate corresponding to the reference adjustment interval as a bitrate coefficient, and determine a product of the initial bitrate and the bitrate coefficient as the target bitrate corresponding to the current adjustment interval.

24. The apparatus according to claims 15-22, wherein the processing module, before determining the target QP of the current adjustment interval based on the target bitrate, is further configured to:
   in response to the current long-term period being the first long-term period of the encoding process of the video data, determine the target bitrate corresponding to the current adjustment interval based on a configured long-term-period bitrate;

   in response to the current adjustment interval being a first adjustment interval in the current long-term period, determine the long-term-period bitrate as the target bitrate corresponding to the current adjustment interval; or
   in response to the current adjustment interval being not the first adjustment interval in the current long-term period, determine the target bitrate corresponding to the current adjustment interval based on the long-term-period bitrate, the long-term-period duration, a total quantity of actual code bits before the current adjustment interval, and a remaining duration of the current long-term period, wherein the total quantity of actual code bits represents total quantity of bits of the video data encoded before the current adjustment interval, and the remaining duration of the current long-term period represents a duration from the current adjustment interval to a last adjustment interval of the current long-term period.

25. The apparatus according to claim 24, wherein the processing module, when determining the target bitrate corresponding to the current adjustment interval based on the long-term-period bitrate, a long-term-period duration, a total quantity of actual code bits before the current adjustment interval, and a remaining duration of the current long-term period, is configured to:
   determine the target bitrate corresponding to the current adjustment interval based on a following formula:

   Target bitrate = [long-term-period bitrate * long-term-period duration - total quantity of actual code bits] / remaining duration of the long-term period.

26. The apparatus according to claims 15-22, wherein the processing module is further configured to:

   select a reference adjustment interval from M number of long-term periods before the current long-term period respectively, M being a positive integer;
   determine an average length of normalized lengths of M number of selected reference adjustment intervals;
   in response to a change percentage of the normalized length of the current adjustment interval to the average length being greater than a first threshold, increase a scene change score value; and
   in response to the scene change score value being greater than a second threshold, update a next long-term period of the current long-term period to be a first long-term period, wherein the scene change score value is used to reflect whether a scene changes, and the scene change score value reflects that the scene changes when the scene change score value is greater than the second threshold;
wherein the processing module, when determining the normalized length of the reference adjustment interval or the current adjustment interval, is configured to:

determine a second QP corresponding to the adjustment interval based on a size and an actual QP of each encoded image in the adjustment interval and a total code length of the adjustment interval, wherein the second QP represents an average QP of the adjustment interval with a frame size as a weight;
determine a normalization adjustment coefficient corresponding to the adjustment interval based on the second QP, a configured reference QP value, and a bitrate change value caused per QP step; and
perform a normalization operation on the total code length of the adjustment interval based on the normalization adjustment coefficient, to obtain the normalized length of the adjustment interval.

27. The apparatus according to claims 15-22, wherein the determining module, when determining a target QP of the current adjustment interval based on the target bitrate, is further configured to:

determine a variable adjustment bitrate corresponding to the current adjustment interval based on the target bitrate corresponding to the current adjustment interval and a scene motion level of the current adjustment interval, wherein the variable adjustment bitrate is less than or equal to the target bitrate, the scene motion level represents a motion degree of a moving object in a scene, and when the scene motion level is larger, the variable adjustment bitrate is larger, and the variable adjustment bitrate is a bitrate dynamically adjusted according to the motion degree of the moving object in the scene;
in response to an actual bitrate corresponding to a QP of the current adjustment interval being greater than the variable adjustment bitrate, increase the QP of the current adjustment interval to obtain the target QP of the current adjustment interval; and
in response to the actual bitrate corresponding to the QP of the current adjustment interval being less than the variable adjustment bitrate, reduce the QP of the current adjustment interval to obtain the target QP of the current adjustment interval.

28. The apparatus according to claim 27, wherein the determining module, when determining a variable adjustment bitrate corresponding to the current adjustment interval based on the target bitrate corresponding to the current adjustment interval and a scene motion level of the current adjustment interval, is configured to:

determine a configured proportional coefficient corresponding to the scene motion level, wherein the proportional coefficient is greater than 0 and less than or equal to 1, and the scene motion level is larger, the proportional coefficient is larger, and the scene motion level has a one-to-one correspondence with the proportional coefficient; and
determine a product of the proportional coefficient and the target bitrate as the variable adjustment bitrate.

29. An electronic device, comprising: a processor and a machine-readable storage medium, wherein the machine-readable storage medium stores machine-executable instructions executable by the processor, and the processor is configured to execute the machine-executable instructions to implement the method according to any one of claims 1-14.

In the encoding process of the video data, for a current adjustment interval in a current long-term period, if the current long-term period is not the first long-term period of the encoding process of the video data, selecting a reference adjustment interval from within a previous long-term period of the current long-term period, where a position of the reference adjustment interval in the previous long-term period is the same as a position of the current adjustment interval in the current long-term period — 101

Determining a target bitrate corresponding to the current adjustment interval based on an actual bitrate corresponding to the reference adjustment interval; where the target bitrate represents an expected average bitrate in the current adjustment interval — 102

Determining a target quantization parameter of the current adjustment interval based on the target bitrate — 103

Encoding the video data based on the target quantization parameter within the current adjustment interval — 104

FIG. 1

| Adjustment period | -------- | Short period | ------------ | Long period |

FIG. 2

FIG. 3A

FIG. 3B

FIG. 3C

FIG. 4

| Processing module 51 | Determining module 52 | Encoding module 53 |

Apparatus for encoding video data

FIG. 5

Processor 61

Machine-readable storage medium 62

Encoding instructions of video data

FIG. 6

**INTERNATIONAL SEARCH REPORT**

| International application No. |
| --- |
| **PCT/CN2023/142308** |

| A. | CLASSIFICATION OF SUBJECT MATTER |
| --- | --- |

H04N19/146(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, DWPI, ENTXT, CNKI, IEEE: 视频, 图像, 图片, 编码, 解码, 压缩, 长周期, 短周期, 时间段, 时段, 时长, 间隔, 码率, 帧率, 比特率, 量化, 归一化, video, image, picture, coding, encoding, decoding, compression, long period, short period, duration, interval, code rate, frame rate, bit rate, quantization, QP, normalization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116016924 A (HANGZHOU HIKVISION DIGITAL TECHNOLOGY CO., LTD.) 25 April 2023 (2023-04-25)<br>claims 1-17, description, paragraphs 1-188, and figures 1-6 | 1-29 |
| X | CN 115379210 A (HANGZHOU HIKVISION DIGITAL TECHNOLOGY CO., LTD.) 22 November 2022 (2022-11-22)<br>description, paragraphs 43-209 and 276-288, and figures 1-5 | 1, 9-11, 13-15, 23-25, 27-29 |
| A | CN 115379210 A (HANGZHOU HIKVISION DIGITAL TECHNOLOGY CO., LTD.) 22 November 2022 (2022-11-22)<br>ditto | 2-8, 12, 16-22, 26 |
| X | CN 113810685 A (HANGZHOU HIKVISION DIGITAL TECHNOLOGY CO., LTD.) 17 December 2021 (2021-12-17)<br>description, paragraphs 148-315, and figures 1-5 | 1, 9-11, 13-15, 23-25, 27-29 |
| A | CN 113810685 A (HANGZHOU HIKVISION DIGITAL TECHNOLOGY CO., LTD.) 17 December 2021 (2021-12-17)<br>ditto | 2-8, 12, 16-22, 26 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 March 2024** | **22 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/142308** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111988610 A (AXIS COMMUNICATIONS AB) 24 November 2020 (2020-11-24)<br>entire document | 1-29 |
| A | WO 2021244341 A1 (ZTE CORP.) 09 December 2021 (2021-12-09)<br>entire document | 1-29 |
| A | WO 2017166487 A1 (LE HOLDINGS BEIJING CO., LTD. et al.) 05 October 2017<br>(2017-10-05)<br>entire document | 1-29 |
| A | US 2019281300 A1 (TENCENT TECHNOLOGY (SHENZHEN) CO., LTD.) 12 September<br>2019 (2019-09-12)<br>entire document | 1-29 |

Form PCT/ISA/210 (second sheet) (July 2022)

| INTERNATIONAL SEARCH REPORT | | | | | International application No. | | |
|---|---|---|---|---|---|---|---|
| Information on patent family members | | | | | **PCT/CN2023/142308** | | |

| Patent document cited in search report | | | Publication date (day/month/year) | Patent family member(s) | | | Publication date (day/month/year) |
|---|---|---|---|---|---|---|---|
| CN | 116016924 | A | 25 April 2023 | None | | | |
| CN | 115379210 | A | 22 November 2022 | WO | 2023036331 | A1 | 16 March 2023 |
| CN | 113810685 | A | 17 December 2021 | None | | | |
| CN | 111988610 | A | 24 November 2020 | JP | 2020205580 | A | 24 December 2020 |
| | | | | JP | 7419152 | B2 | 22 January 2024 |
| | | | | EP | 3742728 | A1 | 25 November 2020 |
| | | | | EP | 3742728 | B1 | 21 September 2022 |
| | | | | US | 2020374527 | A1 | 26 November 2020 |
| | | | | US | 11178401 | B2 | 16 November 2021 |
| | | | | KR | 20200135159 | A | 02 December 2020 |
| | | | | KR | 102537858 | B1 | 26 May 2023 |
| | | | | TW | 202101983 | A | 01 January 2021 |
| WO | 2021244341 | A1 | 09 December 2021 | None | | | |
| WO | 2017166487 | A1 | 05 October 2017 | None | | | |
| US | 2019281300 | A1 | 12 September 2019 | JP | 2020518174 | A | 18 June 2020 |
| | | | | JP | 7012747 | B2 | 28 January 2022 |
| | | | | US | 11089305 | B2 | 10 August 2021 |
| | | | | KR | 20190122830 | A | 30 October 2019 |
| | | | | KR | 102198020 | B1 | 05 January 2021 |
| | | | | EP | 3606050 | A1 | 05 February 2020 |
| | | | | EP | 3606050 | A4 | 20 May 2020 |
| | | | | WO | 2019033877 | A1 | 21 February 2019 |

Form PCT/ISA/210 (patent family annex) (July 2022)